# EUROPEAN PATENT APPLICATION

(11) **EP 4 603 895 A1**
(43) Date of publication of application: **20.08.2025**
(21) Application number: 23896020.7
(22) Date of filing: 30.06.2023
(51) Int. Cl.: G02F 1/035

(54) **MODULATOR, OPTICAL MODULE, OPTICAL COMMUNICATION DEVICE, AND SYSTEM**

(30) Priority: 29.11.2022 CN 202211516004
(71) Applicant: Huawei Technologies Co., Ltd., Shenzhen, Guangdong 518129 (CN)
(72) Inventor: ZHANG, Peijie, Shenzhen, Guangdong 518129 (CN); GUI, Chengcheng, Shenzhen, Guangdong 518129 (CN); SONG, Xiaolu, Shenzhen, Guangdong 518129 (CN)
(74) Representative: Pfenning, Meinig & Partner mbB
(86) International application number: PCT/CN2023/104712
(87) International publication number: WO 2024/113856

(57) **Abstract**

A modulator, an optical module, and an optical communication device and system are provided, and belong to the field of optical communication technologies. The modulator includes a Mach-Zehnder optical waveguide structure and a plurality of electrode structures. The optical waveguide structure is divided into a plurality of optical waveguide sections that are in one-to-one correspondence with the plurality of electrode structures and that are connected in sequence, and the plurality of electrode structures are arranged in parallel with the plurality of optical waveguide sections. Each of the plurality of electrode structures is connected to a radio frequency signal source, and the electrode structure is configured to provide an electric field for a corresponding optical waveguide section based on a radio frequency signal from the radio frequency signal source, to modulate light transmitted in the optical waveguide section. The plurality of electrode structures include a first electrode structure and a second electrode structure that are adjacent to each other, and directions of electric fields provided by the first electrode structure and the second electrode structure are opposite. This application can resolve a problem that a bandwidth that can be supported by the modulator is small. This application is applied to the modulator.

## Description

This application claims priority to Chinese Patent Application No. 202211516004.6, filed on November 29, 2022 and entitled "MODULATOR, OPTICAL MODULE, AND OPTICAL COMMUNICATION DEVICE AND SYSTEM", which is incorporated herein by reference in its entirety.

### TECHNICAL FIELD

This application relates to the field of optical communication technologies, and in particular, to a modulator, an optical module, and an optical communication device and system.

### BACKGROUND

Optical communication devices can communicate with each other via light. A modulator is an important component of the optical communication device. The modulator can modulate the light into an optical signal based on a radio frequency signal, to implement conversion from an electrical signal to an optical signal.

The modulator includes an optical waveguide structure and a plurality of electrode structures. The optical waveguide structure is divided into a plurality of optical waveguide sections that are connected in sequence. The plurality of electrode structures are arranged in parallel with the plurality of optical waveguide sections, and the plurality of electrode structures are in one-to-one correspondence with the plurality of optical waveguide sections. A radio frequency signal is transmitted on an electrode structure, and the electrode structure may provide an electric field for a corresponding optical waveguide section based on the radio frequency signal, to modulate light transmitted in the optical waveguide section.

However, a high-frequency radio frequency signal is greatly attenuated in the modulator, resulting in poor light modulation effect of the electrode structure based on an attenuated high-frequency radio frequency signal, and a bandwidth that can be supported by the modulator is small.

### SUMMARY

This application provides a modulator, an optical module, and an optical communication device and system, to resolve a problem that a bandwidth that can be supported by a modulator is small. The technical solutions are as follows.

According to a first aspect, this application provides a modulator. The modulator includes a Mach-Zehnder (Mach-Zehnder, MZ) optical waveguide structure and a plurality of electrode structures. The MZ optical waveguide structure includes a splitter, two waveguide arms, and a combiner. The splitter has one input port and two output ports, and the two output ports are respectively connected to ends of the two waveguide arms. The combiner has two input ports and one output port, and the two input ports are respectively connected to the other ends of the two waveguide arms.

The optical waveguide structure is divided into a plurality of optical waveguide sections that are in one-to-one correspondence with the plurality of electrode structures and that are connected in sequence, and the plurality of electrode structures are arranged in parallel with the plurality of optical waveguide sections. Each of the plurality of electrode structures is connected to a radio frequency signal source, and the electrode structure is configured to provide an electric field for a corresponding optical waveguide section based on a radio frequency signal from the radio frequency signal source, to modulate light transmitted in the optical waveguide section. The plurality of electrode structures include a first electrode structure and a second electrode structure that are adjacent to each other, and directions of electric fields provided by the first electrode structure and the second electrode structure are opposite.

In addition, the plurality of electrode structures may also include electrode structures that are adjacent to each other and that provide electric fields in a same direction for corresponding optical waveguide sections. When directions of electric fields provided by two adjacent electrode structures for corresponding optical waveguide sections are not opposite, the directions of the electric fields provided by the two electrode structures for the corresponding optical waveguide sections are the same. Certainly, the plurality of electrode structures may also not include electrode structures that are adjacent to each other and that provide electric fields in a same direction for corresponding optical waveguide sections. This is not limited in this application.

In the modulator provided in this application, the optical waveguide structure includes the plurality of optical waveguide sections that are connected in sequence, and light transmitted in these optical waveguide sections can be modulated in the electric fields provided by the corresponding electrode structures. In addition, the directions of the electric fields provided by the first electrode structure and the second electrode structure for the corresponding optical waveguide sections based on the radio frequency signal are opposite. This is equivalent to adding an equalization tap to light transmitted in the modulator, so that the light transmitted in the modulator can be equalized. After the light transmitted in the modulator is equalized, effect of modulating the light by the electrode structures in the modulator based on high-frequency and low-frequency radio frequency signals can be equalized, to increase a bandwidth of the modulator.

Further, the first electrode structure and the second electrode structure are both connected to the radio frequency signal source. A manner of connecting the first electrode structure and the second electrode structure to the radio frequency signal source may be designed, so that the first electrode structure and the second electrode structure provide the electric fields in opposite directions for the corresponding optical waveguide sections. The following describes, by using several implementations as examples, a manner of connecting both the first electrode structure and the second electrode structure to the radio frequency signal source.

(1) The first implementation is applicable to the following case: The first electrode structure and the second electrode structure are configured to provide the electric fields for the corresponding optical waveguide sections based on a same radio frequency signal from the radio frequency signal source.

For example, the radio frequency signal source has a first port and a second port, the first port is configured to output a first radio frequency signal, the second port is configured to output a second radio frequency signal, and the first radio frequency signal and the second radio frequency signal are differential signals. The same radio frequency signal includes at least one of the first radio frequency signal and the second radio frequency signal. For example, the same radio frequency signal includes the first radio frequency signal, or the second radio frequency signal, or the first radio frequency signal and the second radio frequency signal.

(1.1) For example, the first electrode structure and the second electrode structure are configured to provide the electric fields for the corresponding optical waveguide sections based on the first radio frequency signal and the second radio frequency signal from the radio frequency signal source. The optical waveguide section includes a first optical waveguide and a second optical waveguide. The electrode structure includes a first electrode, a second electrode, and a third electrode. The modulator further includes a first conductive strip and a second conductive strip. The first conductive strip, the first electrode, the first optical waveguide, the second electrode, the second optical waveguide, the third electrode, and the second conductive strip are arranged in sequence, and the first optical waveguide, the second optical waveguide, the first conductive strip, and the second conductive strip are arranged in parallel. The first conductive strip is connected to the first port, and the second conductive strip is connected to the second port. The first electrode in the first electrode structure and the third electrode in the second electrode structure are both connected to the first conductive strip. The plurality of second electrodes in the plurality of electrode structures are connected. The third electrode in the first electrode structure and the first electrode in the second electrode structure are both connected to the second conductive strip.

The first electrodes in the first electrode structure and the second electrode structure are connected to different ports of the radio frequency signal source, and the third electrodes in the first electrode structure and the second electrode structure are also connected to different ports of the radio frequency signal source. The plurality of second electrodes in the plurality of electrode structures are connected. For example, all the second electrodes are connected to a direct current signal source. In this way, a direction of an electric field generated between the electrodes in the first electrode structure can be opposite to a direction of an electric field generated between the electrodes in the second electrode structure.

In the example (1.1), the radio frequency signals output by the radio frequency signal source are sequentially loaded to the optical waveguide sections, and the first radio frequency signal and the second radio frequency signal are loaded to different optical waveguides in the optical waveguide section. The first radio frequency signal crosses the second radio frequency signal between the optical waveguide sections corresponding to the first electrode structure and the second electrode structure, and before and after the crossing, an optical waveguide to which each radio frequency signal is loaded changes. This crossing is equivalent to performing reverse processing on light transmitted in the optical waveguides, and is equivalent to adding an equalization tap to the light, so that the light transmitted in the modulator can be equalized.

(1.2) For another example, the first electrode structure and the second electrode structure are configured to provide the electric fields for the corresponding optical waveguide sections based on the first radio frequency signal and the second radio frequency signal from the radio frequency signal source. The optical waveguide section includes a first optical waveguide and a second optical waveguide. The electrode structure includes a first electrode, a second electrode, a third electrode, and a fourth electrode. The modulator further includes a first conductive strip, a second conductive strip, and a third conductive strip. The first conductive strip, the first electrode, the first optical waveguide, the second electrode, the second conductive strip, the third electrode, the second optical waveguide, the fourth electrode, and the third conductive strip are arranged in sequence, and the first optical waveguide, the second optical waveguide, the first conductive strip, the second conductive strip, and the third conductive strip are arranged in parallel. The second conductive strip is connected to the first port or the first conductive strip is connected to the first port, and the third conductive strip is connected to the second port. The first electrode in the first electrode structure and the second electrode in the second electrode structure are both connected to the first conductive strip. The second electrode in the first electrode structure, the first electrode in the second electrode structure, the third electrode in the first electrode structure, and the fourth electrode in the second electrode structure are all connected to the second conductive strip. The fourth electrode in the first electrode structure and the third electrode in the second electrode structure are both connected to the third conductive strip.

In the example (1.2), the radio frequency signals output by the radio frequency signal source are sequentially loaded to the optical waveguide sections, and the first radio frequency signal and the second radio frequency signal are loaded to different optical waveguides in the optical waveguide section. Each of the first radio frequency signal and the second radio frequency signal crosses a direct current signal provided by a direct current signal source between the optical waveguide sections corresponding to the first electrode structure and the second electrode structure. This crossing is equivalent to performing reverse processing on light transmitted in the optical waveguides, and is equivalent to adding an equalization tap to the light, so that the light transmitted in the modulator can be equalized.

Further, in the examples (1.1) and (1.2), for an electrode (for example, the first electrode and the third electrode) that is in an electrode structure and that is connected to a conductive strip, the electrode is in a strip shape parallel to the conductive strip, and one end of the electrode is connected to the conductive strip through a connection strip. It can be learned that a structure obtained by connecting the electrode to the connection strip is L-shaped, and one end of the L-shaped structure is connected to the conductive strip. When the electrode is connected to the conductive strip through the connection strip, in the electrode structure, two electrodes connected to adjacent conductive strips may be located between connection strips connected to the two electrodes. In an extension direction of the conductive strips, a distance between the two electrodes that are in the electrode structure and that are connected to adjacent conductive strips is less than (A+B)/2, and A and B respectively represent lengths of the two electrodes in the extension direction. The distance between the two electrodes in the extension direction is a distance between centers of the two electrodes in the extension direction. It can be learned that the two electrodes that are in the electrode structure and that are connected to the adjacent conductive strips overlap in the extension direction of the conductive strips, so that the electrodes and the connection strips of the electrodes are arranged compactly, and a chip area of the entire modulator is small.

(2) The second implementation is applicable to the following case: The first electrode structure and the second electrode structure are configured to provide the electric fields for the corresponding optical waveguide sections based on different radio frequency signals from the radio frequency signal source.

For example, the radio frequency signal source has a first port and a second port, the first port is configured to output a first radio frequency signal, the second port is configured to output a second radio frequency signal, and the first radio frequency signal and the second radio frequency signal are differential signals. The first electrode structure is configured to provide the electric field for the corresponding optical waveguide section based on the first radio frequency signal from the radio frequency signal source, and the second electrode structure is configured to provide the electric field for the corresponding optical waveguide section based on the second radio frequency signal from the radio frequency signal source.

For example, the optical waveguide section includes a first optical waveguide and a second optical waveguide. The electrode structure includes a first electrode, a second electrode, and a third electrode. The first electrode, the second electrode, and the third electrode are all in a strip shape. The first electrode, the first optical waveguide, the second electrode, the second optical waveguide, and the third electrode are arranged in sequence and in parallel. A length of the second electrode in the first electrode structure is different from a length of the second electrode in the second electrode structure. The second electrode in the first electrode structure is connected to the first port, and the second electrode in the second electrode structure is connected to the second port.

Optionally, the first electrode and the third electrode in the first electrode structure and the first electrode and the third electrode in the second electrode structure may be all grounded or connected to a direct current signal source.

The first electrodes and the third electrodes in the first electrode structure and the second electrode structure are all connected to a same signal, the second electrodes are respectively connected to the first radio frequency signal and the second radio frequency signal, and the first radio frequency signal and the second radio frequency signal are differential signals. Therefore, a direction of an electric field formed between the first electrode and the second electrode in the first electrode structure is opposite to a direction of an electric field formed between the first electrode and the second electrode in the second electrode structure, and a direction of an electric field formed between the third electrode and the second electrode in the first electrode structure is opposite to a direction of an electric field formed between the third electrode and the second electrode in the second electrode structure. In this way, the directions of the electric fields provided by the first electrode structure and the second electrode structure for the corresponding optical waveguide structures are opposite.

Optionally, the optical waveguide structure extends along an S shape, and the first electrode structure and the second electrode structure are arranged in sequence in an arrangement direction of the first optical waveguide and the second optical waveguide.

In the foregoing content, the first electrode structure and the second electrode structure provide the electric fields in opposite directions for the corresponding optical waveguide sections, so that an equalization tap is added to light transmitted in the modulator, and therefore, the light transmitted in the modulator can be equalized.

Further, a delay structure may be connected between at least some optical waveguide sections, to adjust an equalization delay amount of the light transmitted in the modulator, and further improve an equalization effect of the light transmitted in the modulator. The delay structure is configured to increase a transmission delay of light between parts connected by the delay structure in the optical waveguide structure, and light transmitted in the delay structure is not modulated by the electrode structure. It may be understood that, when locations of two optical waveguide sections remain unchanged, a delay of light between the two optical waveguide sections when the two optical waveguide sections are connected through a delay structure is greater than a delay of light between the two optical waveguide sections when the two optical waveguide sections are connected through a shortest optical waveguide.

In the first possible implementation (1), the modulator further includes at least one of a first delay structure and a second delay structure. The first delay structure and the second delay structure are arranged in sequence in a transmission direction of light in the optical waveguide structure. The first delay structure and the second delay structure each are connected to adjacent optical waveguide sections in the plurality of optical waveguide sections. The adjacent optical waveguide sections connected to the first delay structure include the optical waveguide section corresponding to the first electrode structure and the optical waveguide section corresponding to the second electrode structure. The adjacent optical waveguide sections connected to the second delay structure are different from the adjacent optical waveguide sections connected to the first delay structure. For example, the adjacent optical waveguide sections connected to the second delay structure include an optical waveguide section corresponding to a second electrode structure group and an optical waveguide section corresponding to a third electrode structure group. The plurality of electrode structures in the modulator include a plurality of electrode structure groups that are arranged in sequence, and quantities (the quantities may be any integer such as 1, 2, and 3) of electrode structures included in different electrode structure groups are the same. A first electrode structure group, the second electrode structure group, and the third electrode structure group are three consecutive electrode structure groups in the plurality of electrode structure groups, the first electrode structure belongs to the first electrode structure group, and the second electrode structure belongs to the second electrode structure group.

In the second possible implementation (2), when the optical waveguide structure extends along the S shape, and the first electrode structure and the second electrode structure are arranged in sequence in the arrangement direction of the first optical waveguide and the second optical waveguide, a distance between the optical waveguide section corresponding to the first electrode structure and the optical waveguide section corresponding to the second electrode structure is far, and an optical waveguide between the two optical waveguide sections may be used as a delay structure.

Further, in the second implementation (2), light transmitted in the optical waveguide structure sequentially passes through the first electrode structure and the second electrode structure, the optical waveguide section corresponding to the second electrode structure includes a first optical waveguide subsection and a second optical waveguide subsection that are connected in sequence, and the modulator further includes a delay structure (another delay structure in the modulator) that connects the first optical waveguide subsection and the second optical waveguide subsection.

In this application, an example in which the delay structure in the modulator is an optical waveguide (which may be referred to as an auxiliary optical waveguide) is used. The auxiliary optical waveguide may be lengthened by bending, to increase a light transmission delay between parts that are connected by the delay structure in the optical waveguide structure. The optical waveguide structure in this application is an MZ optical waveguide structure, and the optical waveguide section and the optical waveguide subsection each include two optical waveguides. Therefore, when the delay structure is implemented by an optical waveguide, the delay structure also includes two optical waveguides. The two optical waveguides in the delay structure are connected, in one-to-one correspondence, to two optical waveguides in each optical waveguide section (or optical waveguide subsection) connected to the delay structure.

It may be understood that the delay structure may also be implemented in another manner. For example, the delay structure may be implemented by a slow-wave structure (or referred to as a slow optical waveguide structure), a sub-wavelength grating, or the like.

Further, the modulator provided in this application may include a signal processing unit. The signal processing unit is connected between the radio frequency signal source and the plurality of electrode structures, and the signal processing unit is configured to process a radio frequency signal that passes through the signal processing unit, for example, perform processing such as signal amplification and signal compensation. It can be learned that the radio frequency signal from the radio frequency signal source is transmitted to the electrode structure after passing through the signal processing unit. In this way, the radio frequency signal can be preprocessed by the signal processing unit, to improve quality of the radio frequency signal and improve an optical communication effect.

It may be understood that the signal processing unit may also include a plurality of signal processing subunits. The signal processing subunit is connected between the radio frequency signal source and at least one of the electrode structures, different signal processing subunits are connected to different electrode structures, and the signal processing subunit is configured to process a radio frequency signal that passes through the signal processing subunit.

The plurality of signal processing subunits may perform same or different processing on radio frequency signals that pass through the signal processing subunits. For example, when the plurality of signal processing subunits are all amplifiers, amplification multiples of the plurality of amplifiers for the radio frequency signals that pass through the amplifiers may be the same or may be different.

Optionally, the plurality of signal processing subunits may be in one-to-one correspondence with the plurality of electrode structure groups, and each signal processing subunit is connected between the radio frequency signal source and a corresponding electrode structure group.

According to a second aspect, this application provides an optical module, including a light source, a radio frequency signal source, and the modulator according to any design of the first aspect. The light source is configured to transmit light to the modulator, the radio frequency signal source is configured to provide a radio frequency signal for the modulator, and the modulator is configured to modulate the light from the light source based on the radio frequency signal from the radio frequency signal source.

According to a third aspect, this application provides an optical communication device, including a processor, a memory, and the optical module according to the second aspect. The memory stores a program, the processor is configured to execute the program stored in the memory, and the processor is further configured to communicate with another optical communication device through the optical module.

According to a fourth aspect, this application provides an optical communication system, including a plurality of optical communication devices. At least one of the optical communication devices is the optical communication device according to the third aspect.

### BRIEF DESCRIPTION OF DRAWINGS

FIG. 1 is a diagram of a structure of an optical module according to an embodiment of this application;
FIG. 2 is a diagram of a structure of a modulator according to an embodiment of this application;
FIG. 3 is a diagram of an MZ optical waveguide structure according to an embodiment of this application;
FIG. 4 is a diagram of a structure of another modulator according to an embodiment of this application;
FIG. 5 is a schematic of the modulator shown in FIG. 4 according to an embodiment of this application;
FIG. 6 is a diagram of a structure of another modulator according to an embodiment of this application;
FIG. 7 is a diagram of a structure of another modulator according to an embodiment of this application;
FIG. 8 is a schematic of the modulator shown in FIG. 7 according to an embodiment of this application;
FIG. 9 is a diagram of a structure of another modulator according to an embodiment of this application;
FIG. 10 is a schematic of the modulator shown in FIG. 9 according to an embodiment of this application;
FIG. 11 is a diagram of a structure of another modulator according to an embodiment of this application;
FIG. 12 is a diagram of a structure of another modulator according to an embodiment of this application;
FIG. 13 is a diagram of a structure of another modulator according to an embodiment of this application;
FIG. 14 is a diagram of a structure of another modulator according to an embodiment of this application;
FIG. 15 is a schematic of a modulator according to an embodiment of this application;
FIG. 16 is a diagram of a structure of another modulator according to an embodiment of this application;
FIG. 17 is a diagram of a slow-wave structure according to an embodiment of this application;
FIG. 18 is a diagram of a structure of another modulator according to an embodiment of this application;
FIG. 19 is a diagram of a cross section AA in FIG. 18 according to an embodiment of this application;
FIG. 20 is a diagram of a cross section BB in FIG. 18 according to an embodiment of this application;
FIG. 21 is a diagram of a cross section CC in FIG. 18 according to an embodiment of this application;
FIG. 22 is a diagram of a cross section DD in FIG. 18 according to an embodiment of this application;
FIG. 23 is a diagram of a cross section EE in FIG. 18 according to an embodiment of this application;
FIG. 24 is a diagram of a cross section FF in FIG. 18 according to an embodiment of this application;
FIG. 25 is a diagram of a structure of another modulator according to an embodiment of this application;
FIG. 26 is a diagram of a cross section AA in FIG. 25 according to an embodiment of this application;
FIG. 27 is a diagram of a cross section BB in FIG. 25 according to an embodiment of this application;
FIG. 28 is a diagram of a cross section CC in FIG. 25 according to an embodiment of this application;
FIG. 29 is a diagram of a cross section DD in FIG. 25 according to an embodiment of this application;
FIG. 30 is a diagram of a cross section EE in FIG. 25 according to an embodiment of this application;
FIG. 31 is a diagram of a cross section FF in FIG. 25 according to an embodiment of this application;
FIG. 32 is a diagram of a structure of another modulator according to an embodiment of this application;
FIG. 33 is a diagram of a cross section AA in FIG. 32 according to an embodiment of this application;
FIG. 34 is a diagram of a cross section BB in FIG. 33 according to an embodiment of this application;
FIG. 35 is a diagram of a hierarchical relationship between an optical waveguide structure and electrodes according to an embodiment of this application;
FIG. 36 is a diagram of a structure of another modulator according to an embodiment of this application;
FIG. 37 is a diagram of a structure of another modulator according to an embodiment of this application;
FIG. 38 is a diagram of a structure of another modulator according to an embodiment of this application;
FIG. 39 is a diagram of an operating curve of a modulator in a related technology; and
FIG. 40 is a diagram of an operating curve of a modulator according to an embodiment of this application.

### DESCRIPTION OF EMBODIMENTS

To make principles and technical solutions of this application clearer, the following further describes implementations of this application in detail with reference to the accompanying drawings.

An optical communication system (or referred to as an optical fiber communication system) is a system that uses an optical signal for communication. The optical communication system includes a plurality of optical communication devices, and the optical signal may be transmitted between the plurality of optical communication devices for communication.

For example, the optical communication system is a passive optical network (passive optical network, PON) system, and optical communication devices in the PON system may be an optical line terminal (optical line terminal, OLT), an optical network unit (optical network unit, ONU), and the like.

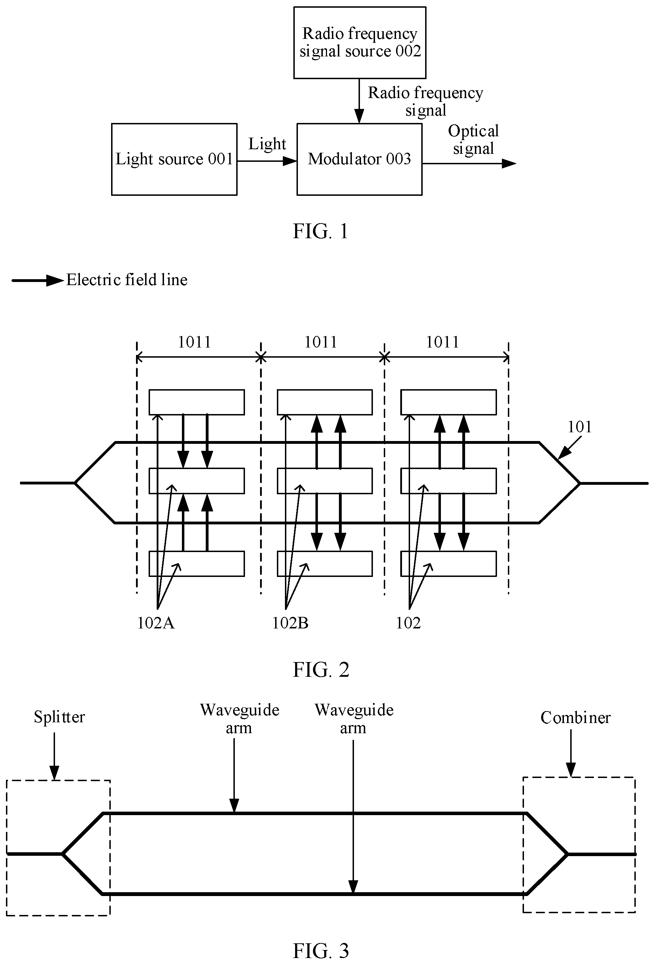

The optical communication device usually includes a processor, a memory, and an optical module. The memory stores a program, the processor is configured to execute the program stored in the memory, and the processor is further configured to communicate with another optical communication device through the optical module. The optical module is an important component of the optical communication device, and the optical communication device may send an optical signal used for communication to another optical communication device through the optical module. For example, FIG. 1 is a diagram of a structure of an optical module according to an embodiment of this application. As shown in FIG. 1, the optical module usually includes a light source 001, a radio frequency signal source 002, and a modulator 003. The light source 001 is configured to transmit light to the modulator 003. The radio frequency signal source 002 is configured to provide a radio frequency (radio frequency, RF) signal (an electrical signal, or referred to as a drive signal) for the modulator 003. The modulator 003 may modulate the light from the light source 001 based on the radio frequency signal from the radio frequency signal source 002, to obtain an optical signal that carries data. Optionally, the optical module may further include a signal processing unit (not shown in FIG. 1). The radio frequency signal source is connected to the modulator 003 through the signal processing unit. The signal processing unit is configured to process a signal that passes through the signal processing unit, for example, perform processing such as signal amplification and signal compensation.

It can be learned that the modulator is an important component of the optical module, and the modulator can complete conversion from an electrical signal to an optical signal. In a related technology, the modulator includes an optical waveguide structure and a plurality of electrode structures. The optical waveguide structure is divided into a plurality of optical waveguide sections that are connected in sequence, the plurality of electrode structures are arranged in parallel with the plurality of optical waveguide sections, and the plurality of electrode structures are in one-to-one correspondence with the plurality of optical waveguide sections. These electrode structures are all connected to a radio frequency signal source, so that a radio frequency signal from the radio frequency signal source is transmitted to each electrode structure. Each electrode structure may provide a same electric field for a corresponding optical waveguide section based on the radio frequency signal, to modulate light transmitted in the optical waveguide section. However, due to a series of reasons such as large attenuation of a high-frequency radio frequency signal from the radio frequency signal source in the modulator, a bandwidth that can be supported by the modulator is small, and performance of the modulator is poor. For example, currently, a silicon optical modulator that uses an optical waveguide made of a silicon material is widely used in an optical module with a bandwidth of 100 gigahertz (GHz) or lower due to features of low costs, small size, compatibility with a complementary metal oxide semiconductor (complementary metal oxide semiconductor, CMOS) technology, and the like. However, a theoretical bandwidth upper limit of the silicon optical modulator is about 70 GHz, and it is difficult to meet a requirement of over 100 GHz.

To increase the bandwidth of the modulator, the following improvements may be made to the modulator.

For example, an electrical equalization module may be used in the signal processing unit to preprocess the radio frequency signal, so that attenuation of a high-frequency radio frequency signal and a low-frequency radio frequency signal in the modulator is balanced, thereby increasing the bandwidth of the modulator. However, introduction of the electrical equalization module causes an increase in both a size and power consumption of an electrical chip in which the radio frequency signal source and the signal processing unit are located. In addition, when preprocessing the radio frequency signal, the electrical equalization module amplifies high-frequency noise of the radio frequency signal, and consequently, performance of the optical communication system is affected.

For another example, after the plurality of electrode structures in the modulator are connected in series, usually, one terminal resistor may be connected to an electrode structure far away from the radio frequency signal source. When the modulator is improved, the bandwidth of the modulator may be increased by designing impedance of the terminal resistor. For example, when the impedance of the terminal resistor is reduced to be less than impedance of the plurality of electrode structures, a bandwidth peaking (peaking) effect is caused, so that the bandwidth of the silicon optical modulator is increased. However, in this case, because the impedance of the terminal resistor is reduced, an output amplitude of the radio frequency signal source is reduced, and consequently a signal-to-noise ratio of the optical communication system is reduced. In addition, after the bandwidth peaking effect is caused, a low-frequency radio frequency signal transmitted in the modulator overlaps a radio frequency signal in some modules in the electrical chip, affecting a bit error rate of the optical communication system.

For still another example, an equalization module including a large quantity of passive devices and waveguide lines may be further added to an optical chip in which the modulator is located. The equalization module is connected between the light source and the optical waveguide structure of the modulator, and can preprocess light from the light source, so that effects of modulating the light based on a high-frequency and a low-frequency radio frequency signal by the electrode structure in the modulator are balanced, to increase the bandwidth of the modulator. However, because the large quantity of passive optical devices and waveguide lines are used, an area of the optical chip is large, and the equalization module also needs to be controlled by an additional electric control module. This increases complexity of the modulator.

An embodiment of this application provides a modulator. The modulator is a traveling-wave modulator. The modulator may increase a bandwidth by designing an original structure of the modulator instead of by using the foregoing three solutions, so that the original structure has an equalization function, and the bandwidth of the modulator is increased, to implement a high-speed modulator with a built-in optical equalizer. An optical module of at least one optical communication device in an optical communication system provided in this embodiment of this application includes the modulator provided in this embodiment of this application.

For example, FIG. 2 is a diagram of a structure of a modulator according to an embodiment of this application. As shown in FIG. 2, the modulator includes an MZ optical waveguide structure 101 and a plurality of electrode structures 102.

As shown in FIG. 3, the MZ optical waveguide structure 101 includes a splitter, two waveguide arms, and a combiner. The splitter has one input port and two output ports, and the two output ports are respectively connected to ends of the two waveguide arms. The combiner has two input ports and one output port, and the two input ports are respectively connected to the other ends of the two waveguide arms.

Still refer to FIG. 2. The optical waveguide structure 101 is divided into a plurality of optical waveguide sections 1011 that are connected in sequence. For example, a part in which the two waveguide arms are located is divided into the plurality of optical waveguide sections 1011. The plurality of electrode structures 102 are arranged in parallel with the plurality of optical waveguide sections 1011, and the plurality of electrode structures 102 are in one-to-one correspondence the plurality of optical waveguide sections 1011. In FIG. 2, an example in which the plurality of electrode structures 102 include three electrode structures 102 is used. A quantity of electrode structures 102 may be another value, for example, 8 or 9. The quantity of electrode structures 102 is not limited in this embodiment of this application.

Each electrode structure 102 is connected to a radio frequency signal source (the radio frequency signal source is not shown in FIG. 2, and a connection between the electrode structure 102 and the radio frequency signal source is not shown, either). The electrode structure 102 is configured to provide an electric field for a corresponding optical waveguide section 1011 based on a radio frequency signal from the radio frequency signal source, to modulate light transmitted in the optical waveguide section 1011.

The plurality of electrode structures 102 include a first electrode structure 102A and a second electrode structure 102B that are adjacent to each other, and directions of electric fields provided by the first electrode structure 102A and the second electrode structure 102B for corresponding optical waveguide sections 1011 are opposite. For example, as shown in FIG. 2, the direction of the electric field provided by the first electrode structure 102A for the corresponding optical waveguide section 1011 is a direction toward a center of the optical waveguide section 1011, and the direction of the electric field provided by the second electrode structure 102B for the corresponding optical waveguide section 1011 is a direction toward outside of the optical waveguide section 1011. For another example, the direction of the electric field provided by the first electrode structure for the corresponding optical waveguide section is a direction toward outside of the optical waveguide section, and the direction of the electric field provided by the second electrode structure for the corresponding optical waveguide section is a direction toward a center of the optical waveguide section.

In addition, the plurality of electrode structures 102 may also include electrode structures that are adjacent to each other and that provide electric fields in a same direction for corresponding optical waveguide sections. For example, in the plurality of electrode structures 102 shown in FIG. 2, both directions of electric fields provided by the second electrode structure 102B and an electrode structure 102 on a side that is of the second electrode structure 102B and that is away from the first electrode structure 102A for corresponding optical waveguide sections 1011 are directions toward outside of the optical waveguide sections 1011.

In conclusion, in the modulator provided in this embodiment of this application, the optical waveguide structure includes the plurality of optical waveguide sections that are connected in sequence, and light transmitted in these optical waveguide sections can be modulated in the electric fields provided by the corresponding electrode structures. In addition, the directions of the electric fields provided by the first electrode structure and the second electrode structure for the corresponding optical waveguide sections based on the radio frequency signal are opposite. This is equivalent to adding an equalization tap to light transmitted in the modulator, so that the light transmitted in the modulator can be equalized. After the light transmitted in the modulator is equalized, effect of modulating the light by the electrode structures in the modulator based on high-frequency and low-frequency radio frequency signals can be equalized, to increase a bandwidth of the modulator.

In addition, in this embodiment of this application, the radio frequency signal is not preprocessed by an electrical equalization module in the radio frequency signal source. Therefore, neither a chip size nor power consumption of the radio frequency signal source increases, nor noise of a high-frequency radio frequency signal is amplified. It may be understood that this embodiment of this application also supports a solution in which the electrical equalization module is used in the radio frequency signal source to preprocess the radio frequency signal.

This embodiment of this application may not rely on a bandwidth peaking effect caused by a terminal resistor. Therefore, there is no problem that an output amplitude of the radio frequency signal source is reduced, and a signal-to-noise ratio of the optical communication system is reduced. In addition, there is no problem that a low-frequency radio frequency signal transmitted in the modulator overlaps a radio frequency signal in some modules of the radio frequency signal source, and a bit error rate of the optical communication system is affected. It may be understood that this embodiment of this application also supports a solution of increasing the bandwidth by using the bandwidth peaking effect caused by the terminal resistor.

This embodiment of this application may not rely on an equalization module including a large quantity of passive devices and waveguide lines outside the modulator, either. Therefore, a chip area of the optical module is not large, and complexity of the modulator is not increased. It may be understood that this embodiment of this application also supports a solution in which the equalization module including the large quantity of passive devices and waveguide lines are added outside the modulator to increase the bandwidth.

Further, the first electrode structure and the second electrode structure are both connected to the radio frequency signal source. A manner of connecting the first electrode structure and the second electrode structure to the radio frequency signal source may be designed, so that the first electrode structure and the second electrode structure provide the electric fields in opposite directions for the corresponding optical waveguide sections. The following describes, by using several implementations as examples, a manner of connecting both the first electrode structure and the second electrode structure to the radio frequency signal source.
(1) The first implementation is applicable to the following case: The first electrode structure and the second electrode structure are configured to provide the electric fields for the corresponding optical waveguide sections based on a same radio frequency signal from the radio frequency signal source. For example, the radio frequency signal source has a first port and a second port, the first port is configured to output a first radio frequency signal, the second port is configured to output a second radio frequency signal, and the first radio frequency signal and the second radio frequency signal are differential signals. The same radio frequency signal includes at least one of the first radio frequency signal and the second radio frequency signal. For example, the same radio frequency signal includes the first radio frequency signal, or the second radio frequency signal, or the first radio frequency signal and the second radio frequency signal. It may be understood that the radio frequency signal source may alternatively have one of the first port and the second port, and the same radio frequency signal is a radio frequency signal output by the port.

(1.1) For example, the first electrode structure and the second electrode structure are configured to provide the electric fields for the corresponding optical waveguide sections based on the first radio frequency signal and the second radio frequency signal from the radio frequency signal source. This solution is applicable to a case in which a material of the optical waveguide structure is silicon or the like.

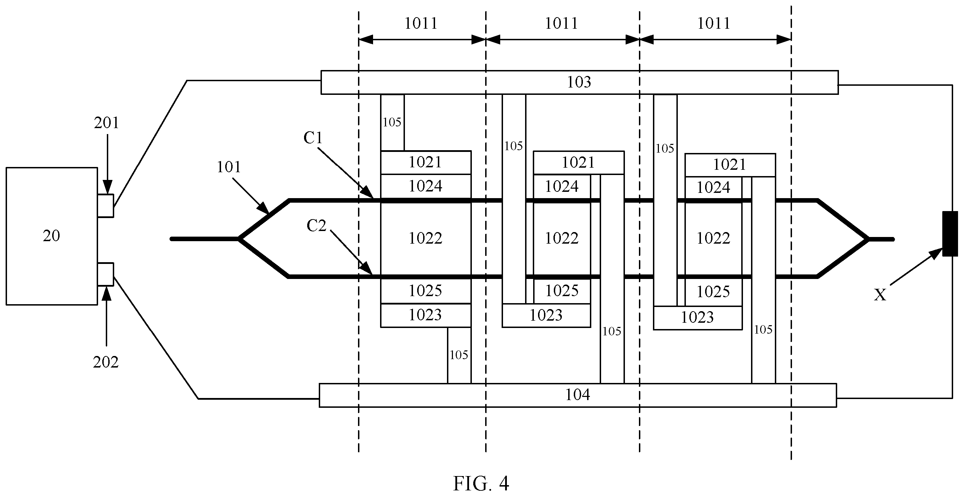

In this case, a manner of connecting both the first electrode structure and the second electrode structure to the radio frequency signal source may be shown in FIG. 4. Each optical waveguide section 1011 includes a first optical waveguide C1 and a second optical waveguide C2. The first optical waveguides C1 in the optical waveguide sections 1011 are connected in sequence, and the second optical waveguides C2 in the optical waveguide sections 101 are also connected in sequence. The first optical waveguide C1 belongs to one waveguide arm in the optical waveguide structure 101, and the second optical waveguide C2 belongs to the other waveguide arm in the optical waveguide structure 101.

Each electrode structure 102 includes a first electrode 1021, a second electrode 1022, and a third electrode 1023. The modulator 10 further includes a first conductive strip 103 and a second conductive strip 104. The first conductive strip 103, the first electrode 1021, the first optical waveguide C1, the second electrode 1022, the second optical waveguide C2, the third electrode 1023, and the second conductive strip 104 are arranged in sequence (for example, arranged in sequence in a direction from top to bottom in FIG. 4). The first optical waveguide C1, the second optical waveguide C2, the first conductive strip 103, and the second conductive strip 104 are arranged in parallel. An electric field formed between the first electrode 1021 and the second electrode 1022 is used to modulate light transmitted in the first optical waveguide C1, and an electric field formed between the third electrode 1023 and the second electrode 1022 is used to modulate light transmitted in the second optical waveguide C2.

The first conductive strip 103 is connected to a first port 201 of a radio frequency signal source 20, and the second conductive strip 104 is connected to a second port 202 of the radio frequency signal source 20. The first electrode 1021 in the first electrode structure (for example, the 1^{st} electrode structure from left to right in FIG. 4) and the third electrode 1023 in the second electrode structure (for example, the 2^{nd} electrode structure from left to right in FIG. 4) are both connected to the first conductive strip 103, and the third electrode 1023 in the first electrode structure and the first electrode 1021 in the second electrode structure are both connected to the second conductive strip 104.

In this embodiment of this application, an example in which the first electrode 1021 in the first electrode structure and the third electrode 1023 in the second electrode structure are connected to the first port 201 through the first conductive strip 103, and the third electrode 1023 in the first electrode structure and the first electrode 1021 in the second electrode structure are connected to the second port 2022 through the second conductive strip 104 is used. It may be understood that the first electrode 1021 in the first electrode structure and the third electrode 1023 in the second electrode structure may alternatively be connected to the first port 201 in another manner (for example, connected to the first port 201 through different leads), and the third electrode 1023 in the first electrode structure and the first electrode 1021 in the second electrode structure may alternatively be connected to the second port 202 in another manner (for example, connected to the second port 202 through different leads). This is not limited in this embodiment of this application.

In the example shown in FIG. 4, the first electrodes in the first electrode structure and the second electrode structure are connected to different ports of the radio frequency signal source 20, and the third electrodes in the first electrode structure and the second electrode structure are also connected to different ports of the radio frequency signal source. A plurality of second electrodes 1022 in the plurality of electrode structures 102 are connected (the connection relationship is not shown in FIG. 4). For example, all the second electrodes 1022 are connected to a direct current signal source. In this way, a direction of an electric field generated between the electrodes in the first electrode structure can be opposite to a direction of an electric field generated between the electrodes in the second electrode structure.

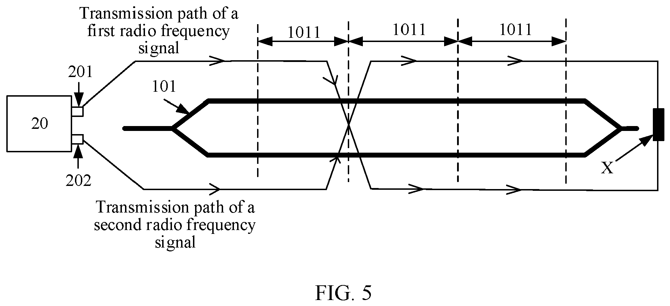

A schematic of the example shown in FIG. 4 is shown in FIG. 5. The example shown in FIG. 4 may be understood as follows: Radio frequency signals output by the radio frequency signal source are sequentially loaded to the optical waveguide sections, and the first radio frequency signal and the second radio frequency signal are loaded to different optical waveguides in the optical waveguide section. The first radio frequency signal crosses the second radio frequency signal between the optical waveguide sections corresponding to the first electrode structure and the second electrode structure, and before and after the crossing, an optical waveguide to which each radio frequency signal is loaded changes. This crossing is equivalent to performing reverse processing on light transmitted in the optical waveguides, and is equivalent to adding an equalization tap to the light, so that the light transmitted in the modulator can be equalized.

Further, in the example in FIG. 4, for an electrode (for example, the first electrode 1021 and the third electrode 1023) that is in the electrode structure 102 and that is connected to a conductive strip, the electrode is in a strip shape parallel to the conductive strip, and one end of the electrode is connected to the conductive strip through the connection strip 105. It can be learned that a structure obtained by connecting the electrode to the connection strip 105 is L-shaped, and one end of the L-shaped structure is connected to the conductive strip. Certainly, the shape of the electrode and the manner of connecting the electrode to the conductive strip are not limited in this embodiment of this application. The electrode may also be in another shape, for example, a circle or an ellipse. A structure obtained by connecting the electrode to the connection strip may also be in another shape (for example, a T shape). Alternatively, the electrode may not be connected to the conductive strip through the connection strip 105.

When the electrode is connected to the conductive strip through the connection strip 105, in the electrode structure 102, two electrodes connected to adjacent conductive strips (for example, the first conductive strip 103 and the second conductive strip 104) may be located between the connection strips 105 connected to the two electrodes. For example, in FIG. 4, the first electrode 1021 in the first electrode structure is located on the right of a connection strip 105 connected to the first electrode 1021, and the third electrode 1023 is located on the left of a connection strip 105 connected to the third electrode 1023, so that the first electrode 1021 and the third electrode 1023 are located between the two connection strips 105. For another example, in FIG. 4, the first electrode 1021 in the second electrode structure is located on the left of a connection strip 105 connected to the first electrode 1021, and the third electrode 1023 is located on the right of a connection strip 105 connected to the third electrode 1023, so that the first electrode 1021 and the third electrode 1023 are located between the two connection strips 105.

In an extension direction (for example, a left-right direction in FIG. 4) of the conductive strips, a distance between two electrodes that are in the electrode structure 102 and that are connected to adjacent conductive strips (for example, the first conductive strip 103 and the second conductive strip 104) is less than (A+B)/2, and A and B respectively represent lengths of the two electrodes in the extension direction. The distance between the two electrodes in the extension direction is a distance between centers of the two electrodes in the extension direction. For example, in FIG. 4, a distance between the first electrode 1021 and the third electrode 1023 in the first electrode structure in the left-right direction is less than a total length of the two electrodes in the extension direction, and the distance may be equal to zero. A distance between the first electrode 1021 and the third electrode 1023 in the second electrode structure in the left-right direction is greater than zero, and is less than a total length of the two electrodes in the extension direction. It can be learned that the two electrodes that are in the electrode structure 102 and that are connected to the adjacent conductive strips overlap in the extension direction of the conductive strips, so that the electrodes and the connection strips 105 of the electrodes are arranged compactly, and a chip area of the entire modulator is small.

Optionally, the solution shown in FIG. 4 is applicable to a case in which a material of the optical waveguide structure is silicon. In this case, still refer to FIG. 4. The electrode structure 102 may further include a first doped structure 1024 and a second doped structure 1025. In addition, the second electrode 1022 is also a doped structure. The first electrode 1021 is connected to the first optical waveguide C1 through the first doped structure 1024, the second electrode 1022 is connected to the first optical waveguide C1 and the second optical waveguide C2, and the third electrode 1023 is connected to the second optical waveguide C2 through the second doped structure 1025.

A doping type of the first doped structure 1024 is the same as a doping type of the second doped structure 1025, and is different from a doping type of the second electrode 1022. For example, the doping type of the first doped structure 1024 is an N type, and the doping type of the second electrode 1022 is a P type; or the doping type of the first doped structure 1024 is the P type, and the doping type of the second electrode 1022 is the N type. A hole density is far greater than an electron density in a structure with P type doping, and an electron density is far greater than a hole density in a structure with N type doping.

It may be understood that each of the first doped structure 1024, the second electrode 1022, and the second doped structure 1025 may have doped regions with one or more concentrations. In addition, when a doped structure includes doped regions with a plurality of concentrations, an arrangement manner of these doped regions is not limited in this embodiment of this application. For example, when the doping types of both the first doped structure 1024 and the second doped structure 1025 are the P type, the first doped structure 1024 and the second doped structure 1025 each may include a plurality of doped regions that are arranged in sequence in a direction close to the second electrode 1022. Doping types of these doped regions are all the P type, but doping concentrations of these doped regions decrease sequentially in the direction close to the second electrode 1022. The second electrode 1022 also includes a plurality of doped regions that are arranged in sequence in an arrangement direction of the first doped structure 1024 and the second doped structure 1025. Doping types of these doped regions are all the N type, and doping concentrations of these doped regions decrease sequentially in a direction away from the center of the second electrode 1022.

Optionally, the plurality of electrode structures in the modulator include a plurality of electrode structure groups that are arranged in sequence, and different electrode structure groups include a same quantity of electrode structures (the quantity may be any integer such as 1, 2, or 3). When the electrode structure group includes a plurality of electrode structures, in electrode structures in each electrode structure group, first doped structures may be connected, and second doped structures may also be connected. However, first doped structures in different electrode structure groups are spaced apart, and the second doped structures in the different electrode structure groups are also spaced apart. A first doped structure connected to each electrode structure group may be referred to as a modulation arm, and a second doped structure connected to each electrode structure group may be referred to as the other modulation arm. The radio frequency signals from the radio frequency signal source are loaded to the two modulation arms through the first electrode and the third electrode, to modulate light in the first optical waveguide and the second optical waveguide.

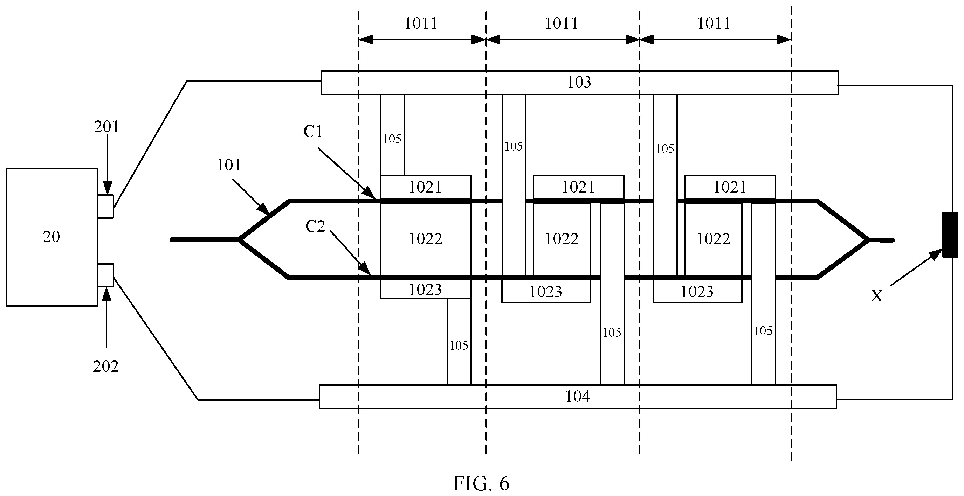

Optionally, the solution shown in FIG. 4 may also be applicable to a case in which the material of the optical waveguide structure is a III-V material (for example, indium phosphide (InP)). In this case, the electrode structure does not include the first doped structure 1024 or the second doped structure 1025, the first electrode 1021 is connected to the first optical waveguide C1, and the third electrode 1023 is connected to the second optical waveguide C2, to obtain a structure shown in FIG. 6.

(1.2) For another example, the first electrode structure and the second electrode structure are configured to provide the electric fields for the corresponding optical waveguide sections based on the first radio frequency signal and the second radio frequency signal from the radio frequency signal source. This solution is applicable to a case in which a material of the optical waveguide structure is an electro-optic crystal (for example, thin film lithium niobate).

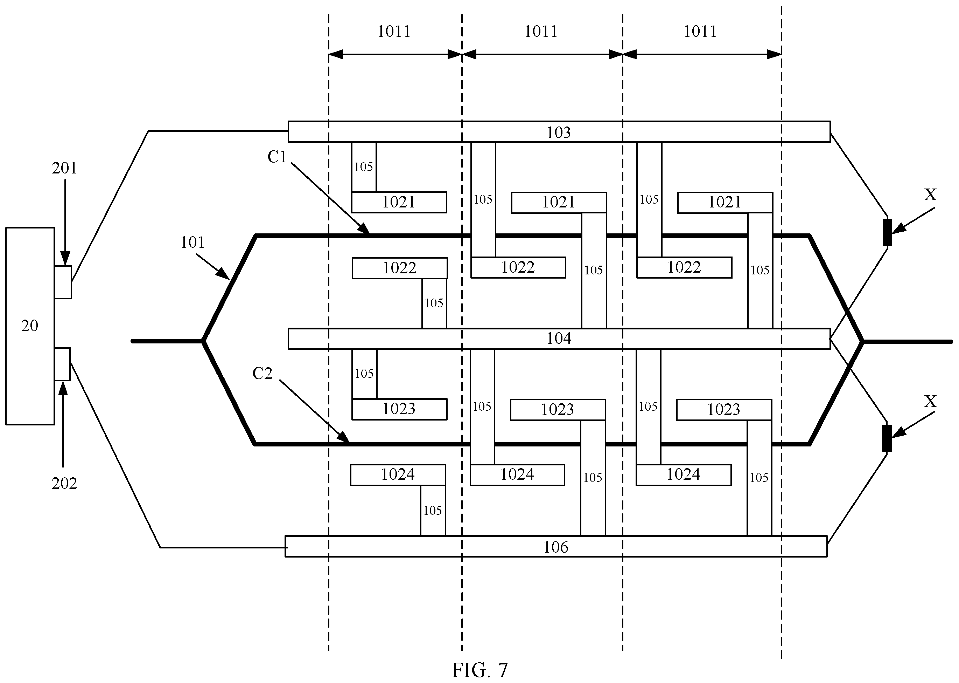

As shown in FIG. 7, each optical waveguide section 1011 includes a first optical waveguide C1 and a second optical waveguide C2 (refer to descriptions of the first optical waveguide and the second optical waveguide in FIG. 4). Each electrode structure 102 includes a first electrode 1021, a second electrode 1022, a third electrode 1023, and a fourth electrode 1024. The modulator 10 further includes a first conductive strip 103, a second conductive strip 104, and a third conductive strip 106.

The first conductive strip 103, the first electrode 1021, the first optical waveguide C1, the second electrode 1022, the second conductive strip 104, the third electrode 1023, the second optical waveguide C2, the fourth electrode 1024, and the third conductive strip 106 are arranged in sequence, and the first optical waveguide C1, the second optical waveguide C2, the first conductive strip 103, the second conductive strip 104, and the third conductive strip 106 are arranged in parallel. An electric field formed between the first electrode 1021 and the second electrode 1022 is used to modulate light transmitted in the first optical waveguide C1, and an electric field formed between the third electrode 1023 and the fourth electrode 1024 is used to modulate light transmitted in the second optical waveguide C2.

The first conductive strip 103 is connected to the first port 201, and the third conductive strip 106 is connected to the second port 202 of the radio frequency signal source 20. The first electrode 1021 in the first electrode structure (for example, the 1^{st} electrode structure from left in FIG. 7) and the second electrode 1022 in the second electrode structure (for example, the 2^{nd} electrode structure from left in FIG. 7) are both connected to the first conductive strip 103. The second electrode 1022 and the third electrode 1023 in the first electrode structure and the first electrode 1021 and the fourth electrode 1024 in the second electrode structure are all connected to the second conductive strip 104. The second conductive strip 104 may be connected to a direct current signal source. The fourth electrode 1024 in the first electrode structure and the third electrode 1023 in the second electrode structure are both connected to the third conductive strip 106.

In this embodiment of this application, an example in which an electrode in an electrode structure is connected to a port of the radio frequency signal source through a conductive strip is used. It may be understood that the electrode in the electrode structure may also be connected to the port of the radio frequency signal source in another manner. For example, different electrodes are connected to the port of the radio frequency signal source through different leads.

In the example shown in FIG. 7, signals connected to the first electrode and the second electrode in the first electrode structure are the same as signals connected to the second electrode and the first electrode, respectively, in the second electrode structure, and signals connected to the third electrode and the fourth electrode in the first electrode structure are the same as signals connected to the fourth electrode and the third electrode, respectively, in the second electrode structure. Therefore, a direction of an electric field formed between the first electrode and the second electrode in the first electrode structure is opposite to a direction of an electric field formed between the first electrode and the second electrode in the second electrode structure, and a direction of an electric field formed between the third electrode and the fourth electrode in the first electrode structure is opposite to a direction of an electric field formed between the third electrode and the fourth electrode in the second electrode structure. In this way, the directions of the electric fields provided by the first electrode structure and the second electrode structure for the corresponding optical waveguide structures are opposite.

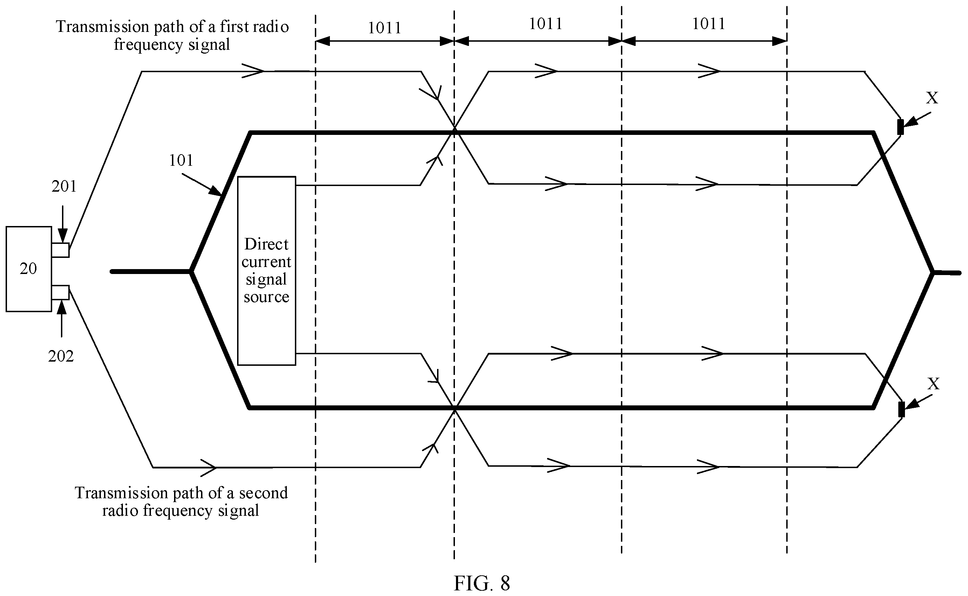

A schematic of the example shown in FIG. 7 is shown in FIG. 8. The example shown in FIG. 7 may be understood as follows: Radio frequency signals output by the radio frequency signal source are sequentially loaded to the optical waveguide sections 1011, and the first radio frequency signal and the second radio frequency signal are loaded to different optical waveguides in the optical waveguide section. Each of the first radio frequency signal and the second radio frequency signal crosses a direct current signal provided by a direct current signal source between the optical waveguide sections corresponding to the first electrode structure and the second electrode structure. This crossing is equivalent to performing reverse processing on light transmitted in the optical waveguides, and is equivalent to adding an equalization tap to the light, so that the light transmitted in the modulator can be equalized.

Further, one end of an electrode connected to a conductive strip in the example shown in FIG. 7 may also be connected to the conductive strip through a connection strip 105, and a structure obtained by connecting the electrode to the connection strip 105 may also be L-shaped. Certainly, the shape of the electrode and the manner of connecting the electrode to the conductive strip are not limited in this embodiment of this application. The electrode may also be in another shape, for example, a circle or an ellipse. A structure obtained by connecting the electrode to the connection strip may also be in another shape (for example, a T shape). Alternatively, the electrode may not be connected to the conductive strip through the connection strip.

When the electrode is connected to the conductive strip through the connection strip 105, in the electrode structure, two electrodes connected to adjacent conductive strips may also be located between connection strips 105 connected to the two electrodes. In an extension direction (for example, a left-right direction in FIG. 7) of the conductive strips, a distance between two electrodes that are in the electrode structure and that are connected to adjacent conductive strips may also be less than (A+B)/2. It can be learned that the two electrodes that are in the electrode structure 102 and that are connected to the adjacent conductive strips overlap in the extension direction of the conductive strips, so that the electrodes and the connection strips 105 of the electrodes are arranged compactly, and a chip area of the entire modulator is small.

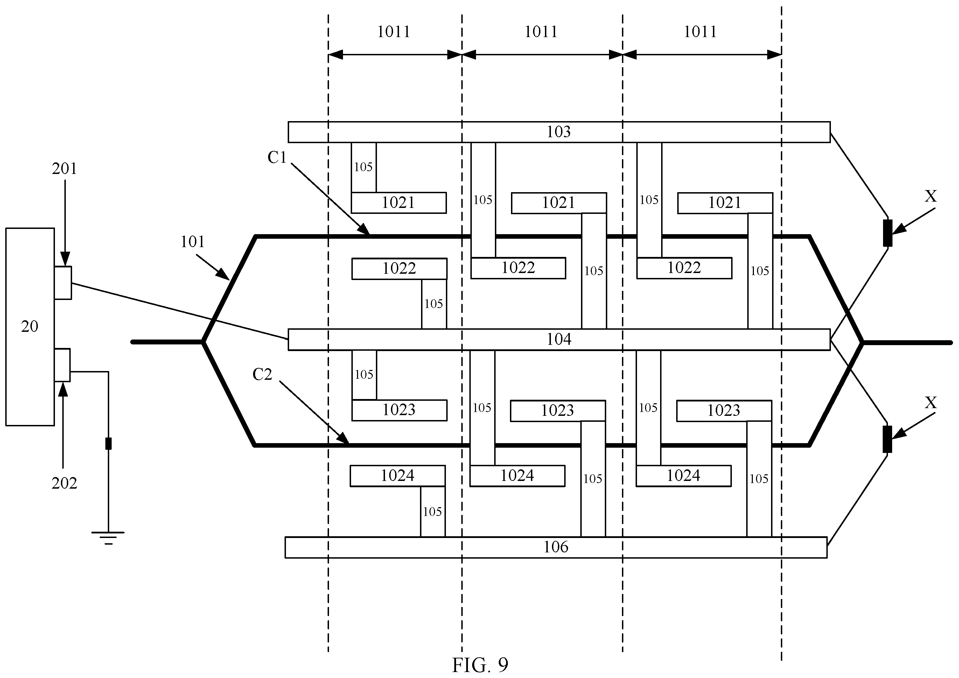

(1.3) For still another example, as shown in FIG. 9, based on the example shown in FIG. 7, the second conductive strip 104 may be connected to the first port 201 of the radio frequency signal source 20 instead of the first conductive strip 103 being connected to the first port 201 and the third conductive strip 106 being connected to the second port 202 of the radio frequency signal source 20. In this case, if the radio frequency signal source 20 has the second port 202, the second port 202 may be grounded (for example, the second port 202 in FIG. 9 is grounded after being connected to a resistor).

In the example shown in FIG. 9, signals connected to the first electrode and the second electrode in the first electrode structure are the same as signals connected to the second electrode and the first electrode, respectively, in the second electrode structure, and signals connected to the third electrode and the fourth electrode in the first electrode structure are the same as signals connected to the fourth electrode and the third electrode, respectively, in the second electrode structure. Therefore, a direction of an electric field formed between the first electrode and the second electrode in the first electrode structure is opposite to a direction of an electric field formed between the first electrode and the second electrode in the second electrode structure, and a direction of an electric field formed between the third electrode and the fourth electrode in the first electrode structure is opposite to a direction of an electric field formed between the third electrode and the fourth electrode in the second electrode structure. In this way, the directions of the electric fields provided by the first electrode structure and the second electrode structure for the corresponding optical waveguide structures are opposite.

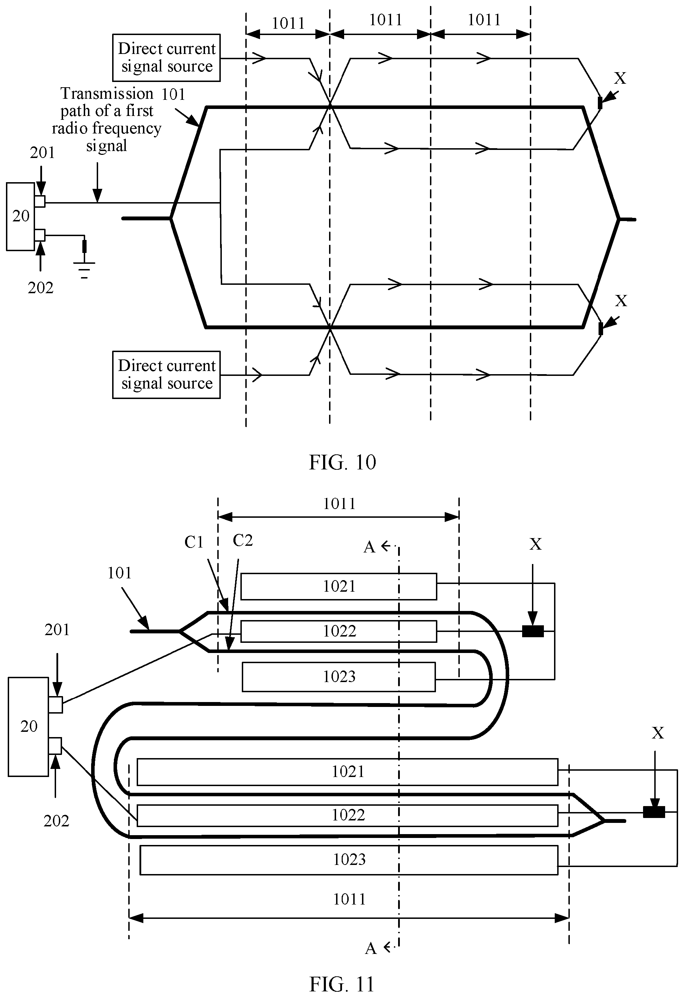

A schematic of the example shown in FIG. 9 is shown in FIG. 10. The example shown in FIG. 9 may be understood as follows: The first radio frequency signal output by the radio frequency signal source is sequentially loaded to optical waveguides in the optical waveguide sections 1011. The first radio frequency signal crosses a direct current signal provided by a direct current signal source between the optical waveguide sections corresponding to the first electrode structure and the second electrode structure. This crossing is equivalent to performing reverse processing on light transmitted in the optical waveguides, and is equivalent to adding an equalization tap to the light, so that the light transmitted in the modulator can be equalized.

Optionally, in Implementations (1.1), (1.2), and (1.3) in the first implementation (1), a pattern formed by an electrode structure and connection strips connected to the electrode structure may be a centrosymmetric pattern.

(2) The second implementation is applicable to the following case: The first electrode structure and the second electrode structure are configured to provide the electric fields for the corresponding optical waveguide sections based on different radio frequency signals from the radio frequency signal source. For example, the radio frequency signal source has a first port and a second port, the first port is configured to output a first radio frequency signal, the second port is configured to output a second radio frequency signal, and the first radio frequency signal and the second radio frequency signal are differential signals. The first electrode structure is configured to provide the electric field for the corresponding optical waveguide section based on the first radio frequency signal from the radio frequency signal source, and the second electrode structure is configured to provide the electric field for the corresponding optical waveguide section based on the second radio frequency signal from the radio frequency signal source.

For example, as shown in FIG. 11, a material of the optical waveguide structure 101 is an electro-optic crystal (for example, thin film lithium niobate), and each optical waveguide section 1011 includes a first optical waveguide C1 and a second optical waveguide C2 (refer to descriptions of the first optical waveguide and the second optical waveguide in FIG. 4). Each electrode structure includes a first electrode 1021, a second electrode 1022, and a third electrode 1023. The first electrode 1021, the second electrode 1022, and the third electrode 1023 are all in a strip shape.

The first electrode 1021, the first optical waveguide C1, the second electrode 1022, the second optical waveguide C2, and the third electrode 1023 are arranged in sequence and in parallel. A length of the second electrode 1022 in the first electrode structure (for example, the 1^{st} electrode structure from top to bottom in FIG. 11) is different from a length of the second electrode 1022 in the second electrode structure (for example, the 2^{nd} electrode structure from top to bottom in FIG. 11). In this embodiment of this application, an example in which the length of the second electrode 1022 in the first electrode structure is less than the length of the second electrode 1022 in the second electrode structure is used. It may be understood that the length of the second electrode 1022 in the first electrode structure may be greater than the length of the second electrode 1022 in the second electrode structure.

The second electrode 1022 in the first electrode structure is connected to the first port 201 of the radio frequency signal source 20, and the second electrode 1022 in the second electrode structure is connected to the second port 202 of the radio frequency signal source 20. Optionally, the first electrode 1021 and the third electrode 1023 in the first electrode structure and the first electrode 1021 and the third electrode 1023 in the second electrode structure may be all grounded or connected to a direct current signal source.

The first electrodes and the third electrodes in the first electrode structure and the second electrode structure are all connected to a same signal, the second electrodes are respectively connected to the first radio frequency signal and the second radio frequency signal, and the first radio frequency signal and the second radio frequency signal are differential signals. Therefore, a direction of an electric field formed between the first electrode and the second electrode in the first electrode structure is opposite to a direction of an electric field formed between the first electrode and the second electrode in the second electrode structure, and a direction of an electric field formed between the third electrode and the second electrode in the first electrode structure is opposite to a direction of an electric field formed between the third electrode and the second electrode in the second electrode structure. In this way, the directions of the electric fields provided by the first electrode structure and the second electrode structure for the corresponding optical waveguide structures are opposite.

Optionally, in the example shown in FIG. 11, an example in which the optical waveguide structure 101 extends along an S shape, and the first electrode structure and the second electrode structure are arranged in sequence in an arrangement direction (a direction from top to bottom) of the first optical waveguide C1 and the second optical waveguide C2 is used. It may be understood that the optical waveguide structure 101 may not extend along the S shape, and the first electrode structure and the second electrode structure may also be arranged in another direction. For example, the optical waveguide structure 101 uses the optical waveguide structure 101 shown in FIG. 4. In this case, the first electrode structure and the second electrode structure may be arranged in sequence in an extension direction of the optical waveguide structure 101.

Further, various modulators provided in this embodiment of this application may include a terminal resistor, for example, a terminal resistor X in the modulators shown in FIG. 4 to FIG. 10. One end that is of each electrode strip and that is not connected to the radio frequency signal source (for example, the radio frequency signal source or the direct current signal source) or that is not grounded in the first implementation (1) may be connected to the terminal resistor X, and one end that is of each electrode and that is not connected to the radio frequency signal source or that is not grounded in the second implementation (2) may be connected to a terminal resistor. It may be understood that the modulator provided in this embodiment of this application may alternatively not include a terminal resistor. This is not limited in this embodiment of this application.

In the foregoing embodiments, the first electrode structure and the second electrode structure provide the electric fields in opposite directions for the corresponding optical waveguide sections, so that an equalization tap is added to light transmitted in the modulator, and therefore, the light transmitted in the modulator can be equalized.

Further, a delay structure may be connected between at least some optical waveguide sections, to adjust an equalization delay amount of the light transmitted in the modulator, and further improve an equalization effect of the light transmitted in the modulator. The delay structure is configured to increase a transmission delay of light between parts connected by the delay structure in the optical waveguide structure, and light transmitted in the delay structure is not modulated by the electrode structure. It may be understood that, when locations of two optical waveguide sections remain unchanged, a delay of light between the two optical waveguide sections when the two optical waveguide sections are connected through a delay structure is greater than a delay of light between the two optical waveguide sections when the two optical waveguide sections are connected through a shortest optical waveguide.

In the first possible implementation (1), the modulator further includes at least one of a first delay structure and a second delay structure. The first delay structure and the second delay structure are arranged in sequence in a transmission direction of light in the optical waveguide structure. The first delay structure and the second delay structure each are connected to adjacent optical waveguide sections in the plurality of optical waveguide sections. The adjacent optical waveguide sections connected to the first delay structure include the optical waveguide section corresponding to the first electrode structure and the optical waveguide section corresponding to the second electrode structure. The adjacent optical waveguide sections connected to the second delay structure are different from the adjacent optical waveguide sections connected to the first delay structure. The adjacent optical waveguide sections connected to the second delay structure may include or may not include a same optical waveguide section as the adjacent optical waveguide sections connected to the first delay structure. This is not limited in this embodiment of this application.

For example, the first delay structure is connected to the optical waveguide section corresponding to the first electrode structure and the optical waveguide section corresponding to the second electrode structure, and the second delay structure is connected to an optical waveguide section corresponding to a second electrode structure group and an optical waveguide section corresponding to a third electrode structure group. The plurality of electrode structures in the modulator include a plurality of electrode structure groups that are arranged in sequence, and quantities (the quantities may be any integer such as 1, 2, and 3) of electrode structures included in different electrode structure groups are the same. A first electrode structure group, the second electrode structure group, and the third electrode structure group are three consecutive electrode structure groups in the plurality of electrode structure groups, the first electrode structure belongs to the first electrode structure group, and the second electrode structure belongs to the second electrode structure group.

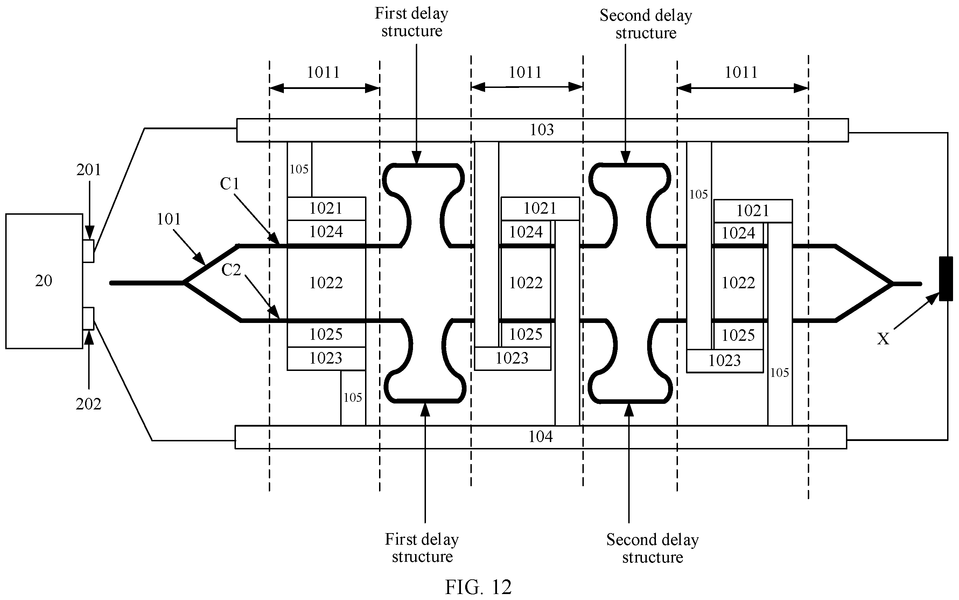

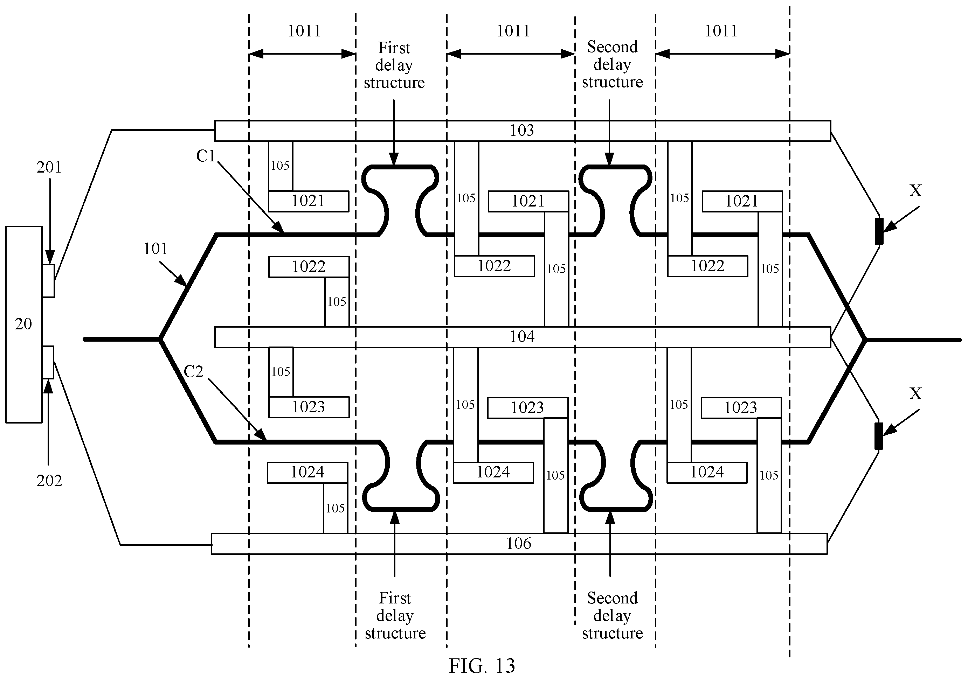

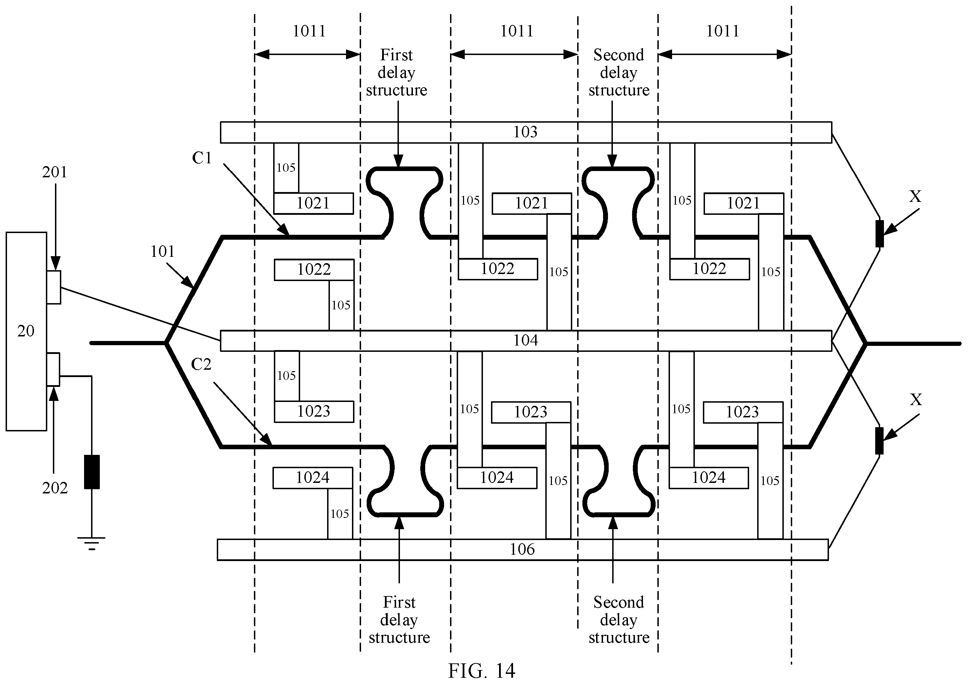

For example, when the modulator shown in FIG. 4 further includes the first delay structure and the second delay structure, a structure of the modulator may be shown in FIG. 12. When the modulator shown in FIG. 7 further includes the first delay structure and the second delay structure, a structure of the modulator may be shown in FIG. 13. When the modulator shown in FIG. 9 further includes the first delay structure and the second delay structure, a structure of the modulator may be shown in FIG. 14. In this embodiment of this application, an example in which the electrode structure group includes one electrode structure is used. It may be understood that the electrode structure group may alternatively include a plurality of electrode structures, for example, two electrode structures. This is not limited in this embodiment of this application.

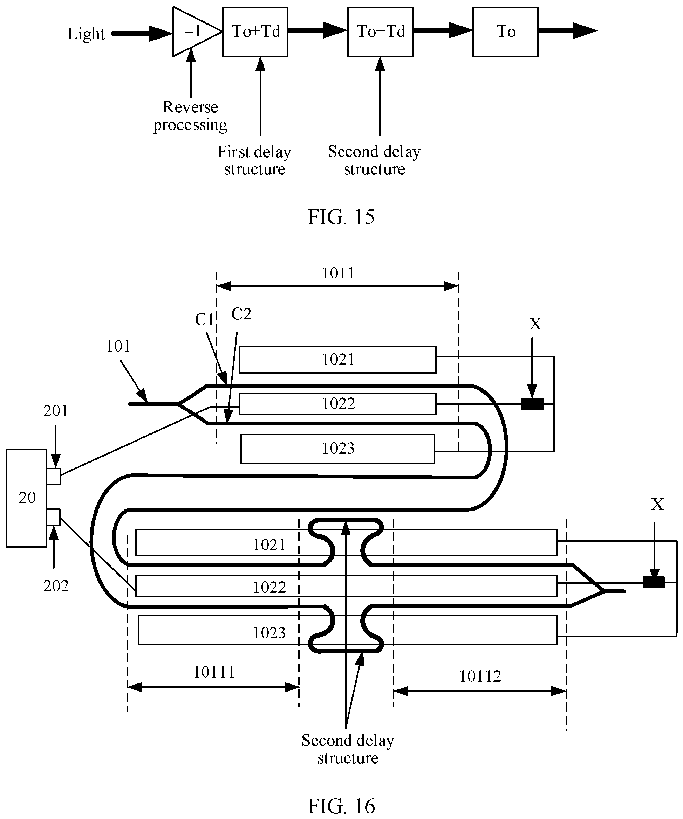

The modulator shown in FIG. 12 is used as an example. Processing performed on light transmitted in the modulator may be shown in FIG. 15. It is equivalent to first performing reverse processing on the light. Then, after the light passes through the first delay structure, a delay is increased by To+Td; after the light passes through the second delay structure, the delay is increased by To+Td; and after the light passes through an optical waveguide section corresponding to a third electrode structure, the delay is increased by To. To represents a transmission delay of light between two adjacent optical waveguide sections when the two adjacent optical waveguide sections are connected through a shortest optical waveguide; and To+Td represents a transmission delay of light between the two optical waveguide sections when the two adjacent optical waveguide sections are connected through a delay structure. To+Td is greater than To. It can be learned that after a delay structure is introduced, an optical transmission delay increases.

In the second possible implementation (2), when the optical waveguide structure 101 extends along the S shape, and the first electrode structure and the second electrode structure are arranged in sequence in the arrangement direction of the first optical waveguide C1 and the second optical waveguide C2, a distance between the optical waveguide section corresponding to the first electrode structure and the optical waveguide section corresponding to the second electrode structure is far, and an optical waveguide between the two optical waveguide sections is used as a delay structure.

Further, in the second implementation (2), as shown in FIG. 16, light transmitted in the optical waveguide structure sequentially passes through the first electrode structure and the second electrode structure, the optical waveguide section corresponding to the second electrode structure includes a first optical waveguide subsection 10111 and a second optical waveguide subsection 10112 that are connected in sequence, and the modulator further includes a delay structure (another delay structure in the modulator) that connects the first optical waveguide subsection 10111 and the second optical waveguide subsection 10112.

In this embodiment of this application, an example in which the delay structure in the modulator is an optical waveguide (which may be referred to as an auxiliary optical waveguide) is used. The auxiliary optical waveguide may be lengthened by bending relative to the optical waveguide structure, to increase a light transmission delay between parts that are connected by the delay structure in the optical waveguide structure. The optical waveguide structure in this application is an MZ optical waveguide structure, and the optical waveguide section and the optical waveguide subsection each include two optical waveguides. Therefore, when the delay structure is implemented by an optical waveguide, the delay structure also includes two optical waveguides. The two optical waveguides in the delay structure are connected, in one-to-one correspondence, to two optical waveguides in each optical waveguide section (or optical waveguide subsection) connected to the delay structure.

It may be understood that the delay structure may also be implemented in another manner. For example, the delay structure may be implemented by a slow-wave structure (or referred to as a slow optical waveguide structure), a sub-wavelength grating, or the like. The slow-wave structure is different from the optical waveguide. When locations of two optical components (for example, optical waveguide sections or optical waveguide subsections) remain unchanged, a delay of light between the two optical components when the two optical components are connected through the slow-wave structure is greater than a delay of light between the two optical components when the two optical components are connected through a shortest optical waveguide. A sub-wavelength grating is a grating whose grating periodicity is less than a wavelength of light used by a modulator for modulation.

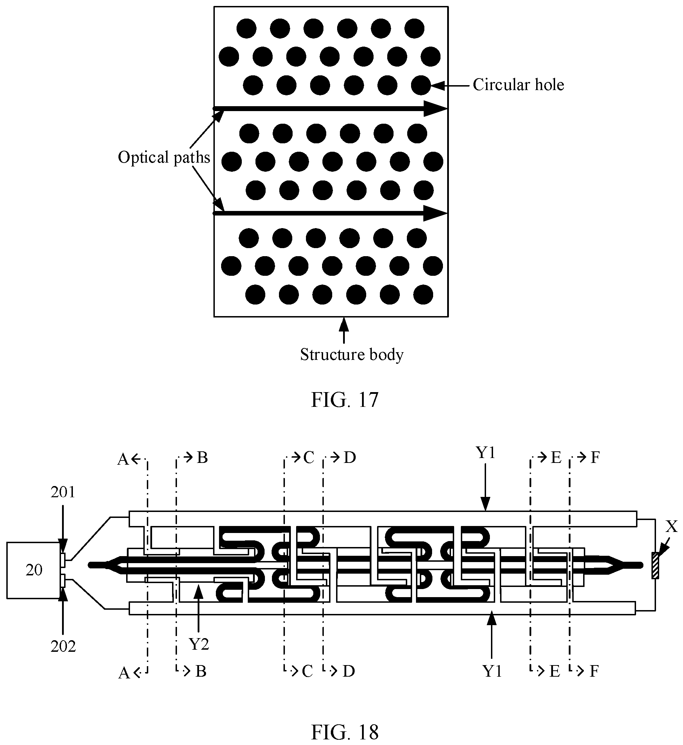

The slow-wave structure is used as an example. The slow-wave structure may be shown in FIG. 17. The slow-wave structure includes a structure body, and a material of the structure body may be a photonic crystal. The structure body has a plurality of circular holes arranged periodically. These round holes have a strong suppression effect on a light field, and consequently, light cannot pass through the circular holes. Therefore, the light can be propagated only along two optical paths shown in FIG. 17. In addition, because the circular holes are periodically arranged, a group refractive index can be affected, so that a speed of light propagation along the optical paths is decreased, to increase a transmission delay of the light. The two optical paths are used to connect two optical waveguides in each optical waveguide section (or optical waveguide subsection) connected to the slow-wave structure. It may be understood that the slow-wave structure shown in FIG. 17 may be further implemented in another manner. For example, the slow-wave structure shown in FIG. 17 includes four parts of circular holes, the four parts of circular holes are arranged in sequence, one optical path exists between the first two parts of circular holes, and the other optical path exists between the last two parts of circular holes.

In addition, in this embodiment of this application, an example in which the plurality of electrode structures include the first electrode structure and the second electrode structure that are adjacent to each other is used. It may be understood that the first electrode structure and the second electrode structure that are adjacent to each other may be referred to as a pair of cross electrode structures. There may be at least one pair of cross electrode structures in the plurality of electrode structures. Each pair of cross electrode structures includes two adjacent electrode structures that provide electric fields in opposite directions for corresponding optical waveguide sections. For an implementation of each pair of cross electrode structures, refer to the first electrode structure and the second electrode structure.

In addition, for any pair of cross electrode structures in the at least one pair of cross electrode structures, optical waveguide sections corresponding to the pair of cross electrode structures may be connected through the first delay structure, or may not be connected through the first delay structure. In addition, an electrode structure group including the pair of cross electrode structures may be connected to a next electrode structure group through the second delay structure, or may not be connected through the second delay structure. This is not limited in this embodiment of this application.

In addition, a shape of the delay structure shown in the accompanying figure in this embodiment of this application may also be implemented in another manner. This is not limited in this embodiment of this application.

Further, the modulator provided in this embodiment of this application can be compatible with a CMOS process.

The foregoing structures (for example, a delay structure, an optical waveguide structure, and an electrode structure) in the modulator may be located at a same layer or may be located at different layers. The following separately uses the modulators shown in FIG. 12, FIG. 14, and FIG. 16 as examples to describe a stacking relationship of film layers in the modulator.

### (1) Modulator shown in FIG. 12:

The modulator shown in FIG. 12 may be implemented in an implementation shown in FIG. 18. Differences are that an electrode structure group in FIG. 12 includes one electrode structure, and an electrode structure group in FIG. 18 includes two electrode structures; and shapes of delay structures in FIG. 12 and FIG. 18 are different.

The first electrode 1021, the third electrode 1023, the first conductive strip 103, the second conductive strip 104, and the connection strip 105 in FIG. 12 are made of a same material, and form a first pattern layer Y1 in FIG. 18. The first pattern layer Y1 may be obtained by patterning a conductive material (for example, metal) layer.

The optical waveguide structure 101, the second electrode 1022, the first doped structure 1024, the second doped structure 1025, the first delay structure, and the second delay structure in FIG. 12 form a second pattern layer Y2 in FIG. 18. The optical waveguide structure 101, the first delay structure, and the second delay structure are made of a same material (for example, are all silicon), and the second electrode 1022, the first doped structure 1024, and the second doped structure 1025 are all obtained by doping on the same material. The second pattern layer Y2 in FIG. 18 may be obtained by patterning on a film layer of the same material and doping on some regions.

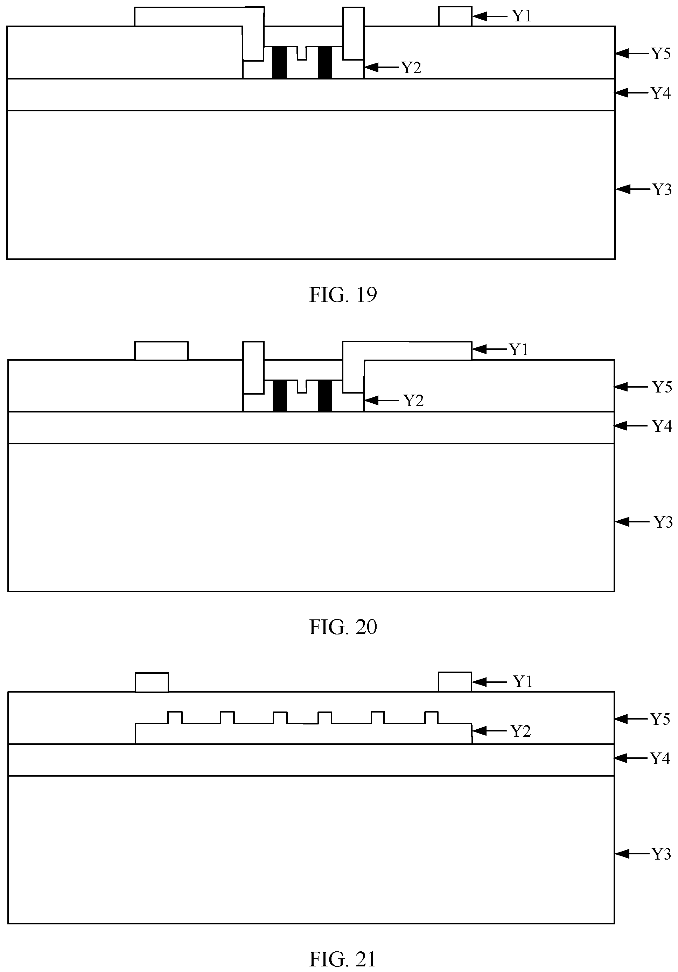

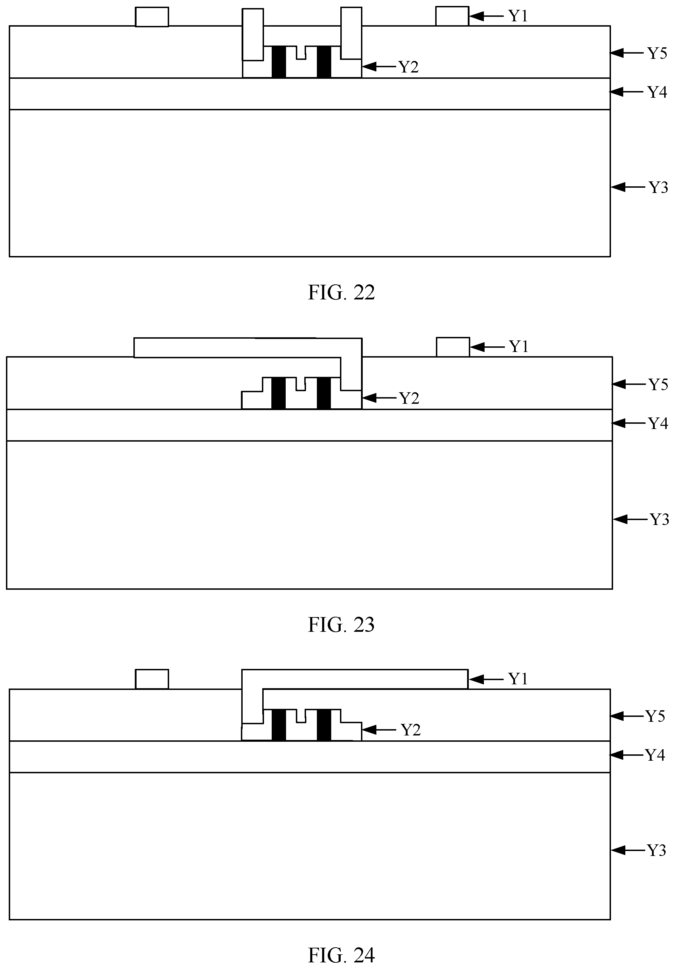

A cross section AA in FIG. 18 may be shown in FIG. 19, a cross section BB in FIG. 18 may be shown in FIG. 20, a cross section CC in FIG. 18 may be shown in FIG. 21, a cross section DD in FIG. 18 may be shown in FIG. 22, a cross section EE in FIG. 18 may be shown in FIG. 23, and a cross section FF in FIG. 18 may be shown in FIG. 24.

With reference to FIG. 18 to FIG. 24, it can be learned that the modulator further includes a substrate (substrate) layer Y3, a box (box) layer Y4, and a cladding (cladding) layer Y5 between the first pattern layer Y1 and the second pattern layer Y2. The substrate layer Y3, the buffer layer Y4, and the cladding layer Y5 are not shown in FIG. 18. The substrate layer Y3, the box layer Y4, the second pattern layer Y2, the cladding layer Y5, and the first pattern layer Y1 are arranged in sequence. In addition, the first electrode in the first pattern layer Y1 is connected to the first doped structure in the second pattern layer Y2 through a via hole in the cladding layer Y5, and the third electrode in the first pattern layer Y1 is connected to the second doped structure in the second pattern layer Y2 through a via hole in the cladding layer Y5. A material of the box layer Y4 may be an insulation material such as silicon dioxide.

### (2) Modulator shown in FIG. 14:

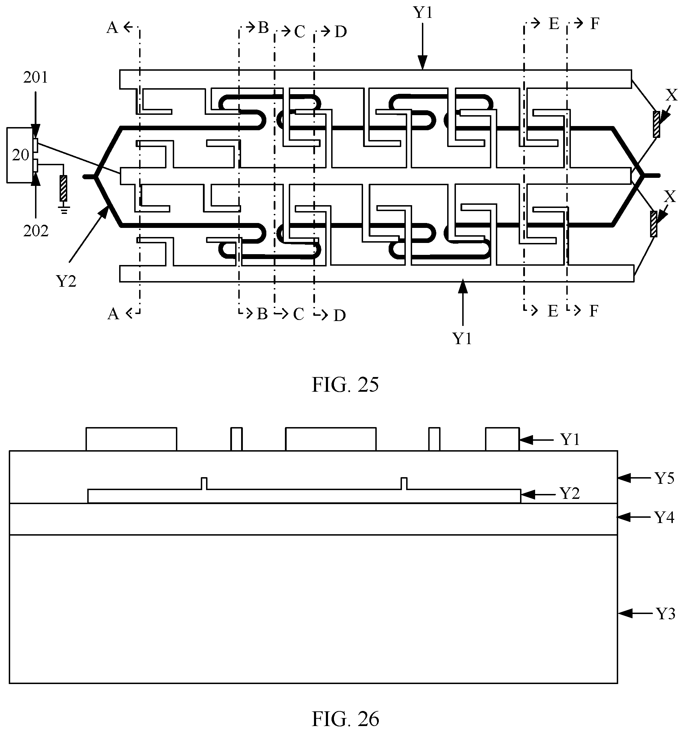

The modulator shown in FIG. 14 may be implemented in an implementation shown in FIG. 25. Differences lie in: An electrode structure group in FIG. 14 includes one electrode structure, and an electrode structure group in FIG. 25 includes two electrode structures, and shapes of delay structures in FIG. 14 and FIG. 25 are different.

The first electrode 1021, the second electrode 1022, the third electrode 1023, the fourth electrode 1024, the first conductive strip 103, the second conductive strip 104, the third conductive strip 106, and the connection strip 105 in FIG. 14 are made of a same material, and form a first pattern layer Y1 in FIG. 25. The first pattern layer Y1 in FIG. 25 may be obtained by patterning a conductive material (for example, metal) layer.

The optical waveguide structure 101, the first delay structure, and the second delay structure in FIG. 14 form a second pattern layer Y2 in FIG. 25. The optical waveguide structure 101, the first delay structure, and the second delay structure are mode of a same material (for example, all are mode of photonic crystals). The second pattern layer Y2 in FIG. 25 may be obtained by patterning a film layer of the same material.

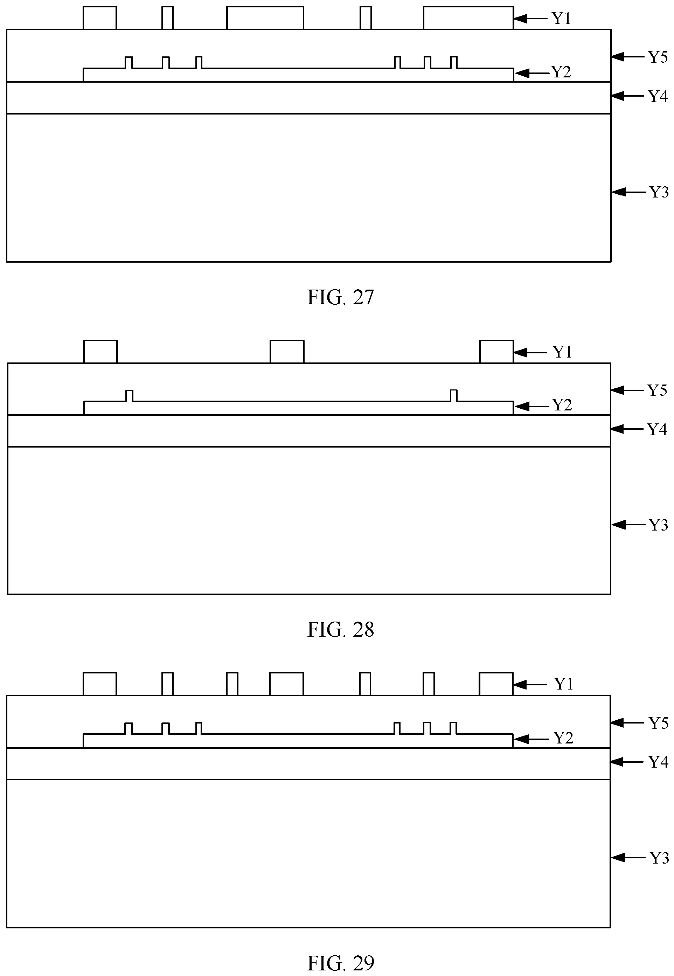

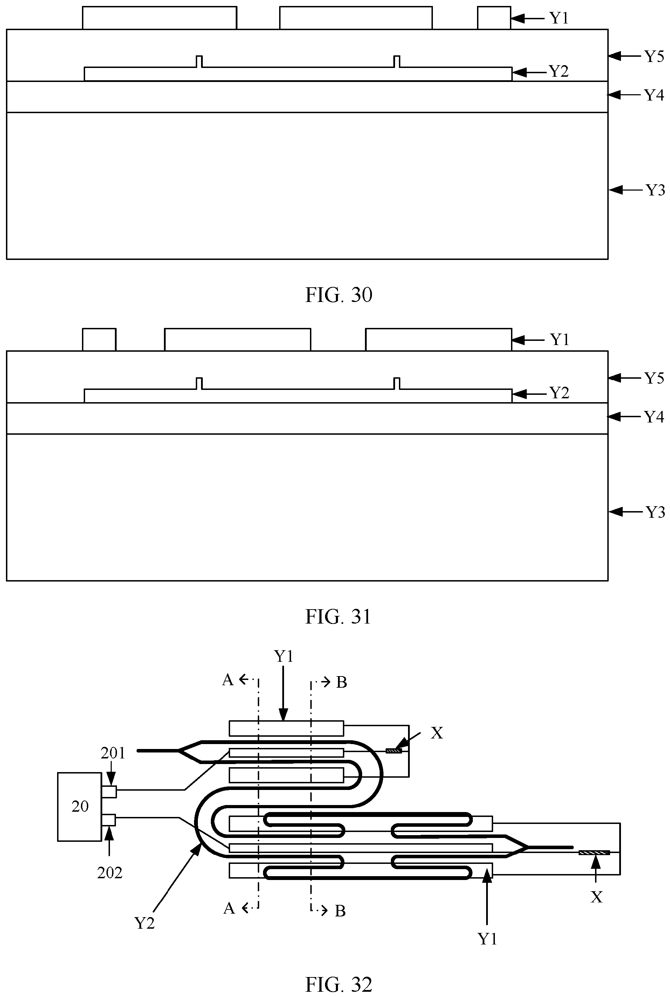

A cross section AA in FIG. 25 may be shown in FIG. 26, a cross section BB in FIG. 25 may be shown in FIG. 27, a cross section CC in FIG. 25 may be shown in FIG. 28, a cross section DD in FIG. 25 may be shown in FIG. 29, a cross section EE in FIG. 25 may be shown in FIG. 30, and a cross section FF in FIG. 25 may be shown in FIG. 31.

With reference to FIG. 25 to FIG. 31, it can be learned that the modulator further includes a substrate layer Y3, a box layer Y4, and a cladding layer Y5 between the first pattern layer Y1 and the second pattern layer Y2. The substrate layer Y3, the buffer layer Y4, and the cladding layer Y5 are not shown in FIG. 25. The substrate layer Y3, the box layer Y4, the second pattern layer Y2, the cladding layer Y5, and the first pattern layer Y1 are arranged in sequence.

### (3) Modulator shown in FIG. 16:

The modulator shown in FIG. 16 may be implemented in an implementation shown in FIG. 32. Differences are that shapes of the delay structures in FIG. 16 and FIG. 32 are different, and locations of the electrode structures are also different.

The first electrode 1021, the second electrode 1022, and the third electrode 1023 in FIG. 16 are made of a same material, and form a first pattern layer Y1 in FIG. 32. The first pattern layer Y1 in FIG. 32 may be obtained by patterning a conductive material (for example, metal) layer.

The optical waveguide structure 101 and the second delay structure in FIG. 16 are made of a same material, and form a second pattern layer Y2 in FIG. 32. The second pattern layer Y2 in FIG. 32 may be obtained by patterning a film layer of the same material (for example, a photonic crystal).

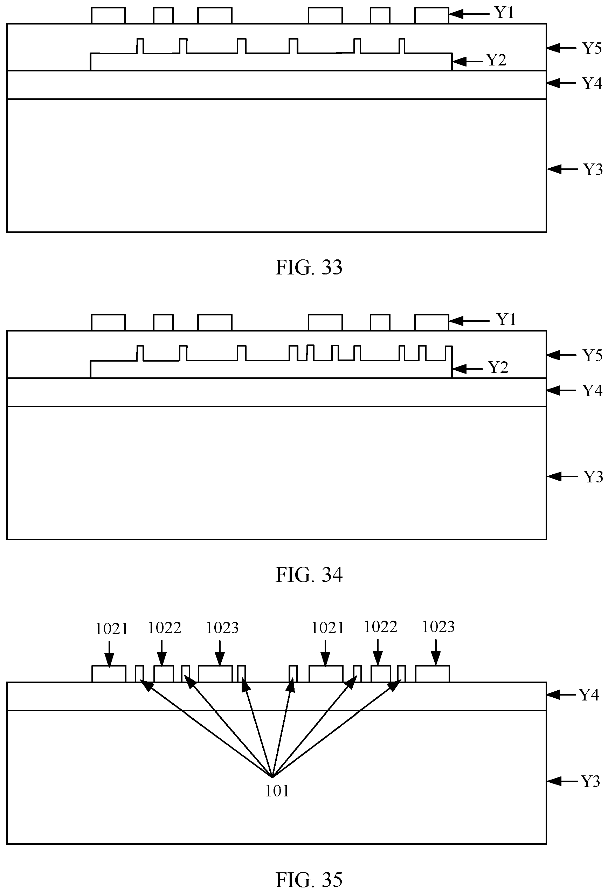

A cross section AA in FIG. 32 may be shown in FIG. 33, and a cross section BB in FIG. 32 may be shown in FIG. 34. With reference to FIG. 32 and FIG. 33, it can be learned that the modulator further includes a substrate layer Y3, a box layer Y4, and a cladding layer Y5 between the first pattern layer Y1 and the second pattern layer Y2. The substrate layer Y3, the buffer layer Y4, and the cladding layer Y5 are not shown in FIG. 25. The substrate layer Y3, the box layer Y4, the second pattern layer Y2, the cladding layer Y5, and the first pattern layer Y1 are arranged in sequence.

It may be understood that in this application, that the substrate layer Y3, the buffer layer Y4, the second pattern layer Y2, the cladding layer Y5, and the first pattern layer Y1 are arranged in sequence is used as an example, or the substrate layer Y3, the buffer layer Y4, the first pattern layer Y1, the cladding layer Y5, and the second pattern layer Y2 may be arranged in sequence.

In some embodiments, the modulator may alternatively not include the cladding layer Y5, and the first pattern layer Y1 and the second pattern layer Y2 may be located at a same layer. For example, a diagram of a cross section AA in the modulator shown in FIG. 11 is shown in FIG. 35. It can be learned that the optical waveguide structure 101, the first electrode 1021, the second electrode 1022, and the third electrode 1023 are at a same layer, and are all located on a side that is of the buffer layer Y4 and that is away from the substrate layer Y3.

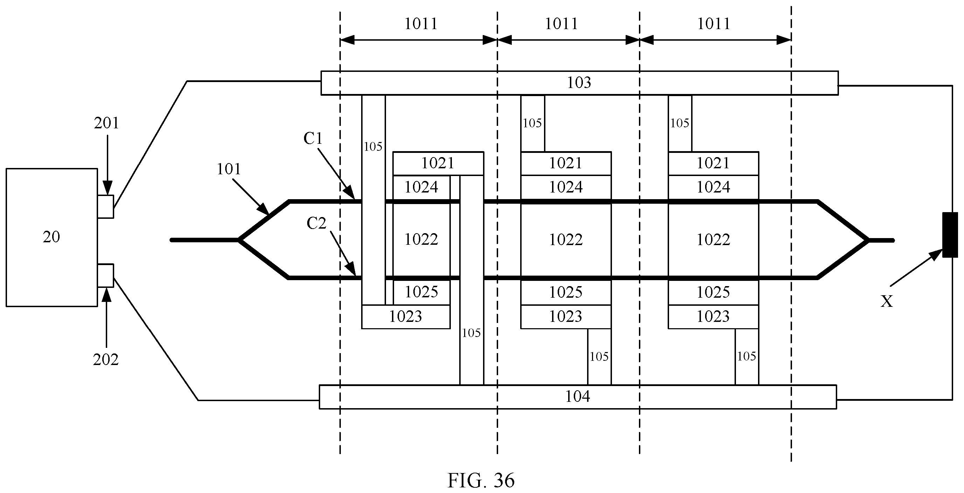

In this embodiment of this application, an example in which a transmission direction of light in the optical waveguide structure is the same as the arrangement direction of the first electrode structure and the second electrode structure is used. It may be understood that the transmission direction of light in the optical waveguide structure may be opposite to the arrangement direction of the first electrode structure and the second electrode structure. For example, when the arrangement direction of the first electrode structure and the second electrode structure shown in FIG. 4 are opposite to the transmission direction, a structure of the modulator may be shown in FIG. 36.

Further, the modulator provided in this embodiment of this application may further include a signal processing unit. The signal processing unit is connected between the radio frequency signal source and the plurality of electrode structures, and the signal processing unit is configured to process a radio frequency signal that passes through the signal processing unit, for example, perform processing such as signal amplification and signal compensation. It can be learned that the radio frequency signal from the radio frequency signal source is transmitted to the electrode structure after passing through the signal processing unit. In this way, the radio frequency signal can be preprocessed by the signal processing unit, to improve quality of the radio frequency signal and improve an optical communication effect.

For example, when the modulator includes a conductive strip (in the modulators shown in FIG. 4, FIG. 6, FIG. 7, and FIG. 9), the signal processing unit may be connected between the radio frequency signal source and the conductive strip, and the conductive strip is connected between the signal processing unit and the electrode structure, so that the signal processing unit is connected between the radio frequency signal source and the electrode structure.

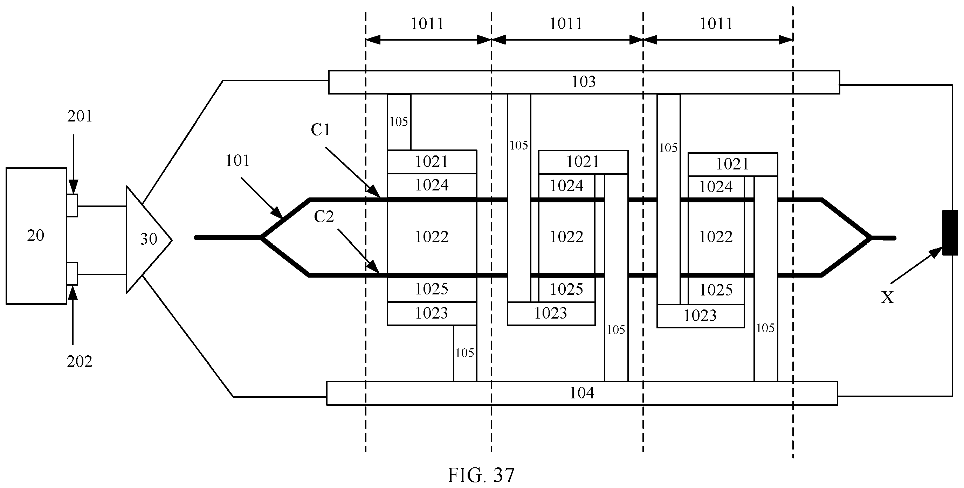

The modulator shown in FIG. 4 is used as an example. As shown in FIG. 37, a signal processing unit 30 may be an amplifier, the signal processing unit 30 is connected to the first port 201 and the second port 202 of the radio frequency signal source 20, and the signal processing unit 30 is further connected to the first conductive strip 103 and the second conductive strip 104. After being amplified by the signal processing unit 30, the first radio frequency signal from the first port 201 is transmitted to the first conductive strip 103. After being amplified by the signal processing unit 30, the second radio frequency signal from the second port 202 is transmitted to the second conductive strip 103.

For another example, when the modulator does not include a conductive strip (in the modulator shown in FIG. 11), the signal processing unit may be connected between the radio frequency signal source and the electrode in the electrode structure.

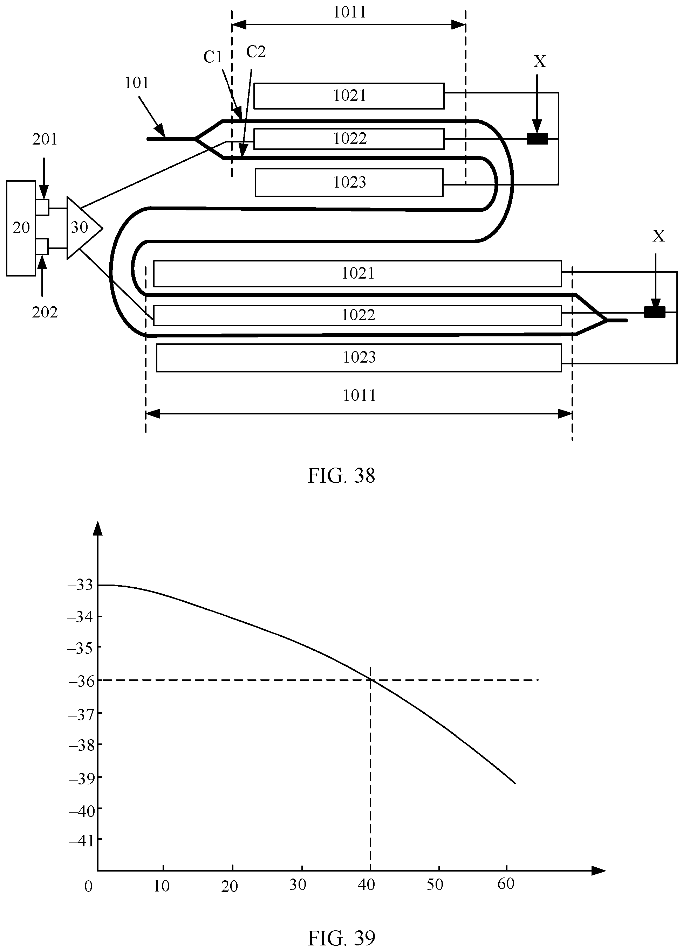

The modulator shown in FIG. 11 is used as an example. As shown in FIG. 38, a signal processing unit 30 may be an amplifier, the signal processing unit 30 is connected to the first port 201 and the second port 202 of the radio frequency signal source 20, and the signal processing unit 30 is further connected to the second electrode 1022 in the first electrode structure and the second electrode 1022 in the second electrode structure. After being amplified by the signal processing unit 30, the first radio frequency signal from the first port 201 is transmitted to the second electrode 1022 in the first electrode structure. After being amplified by the signal processing unit 30, the second radio frequency signal from the second port 202 is transmitted to the second electrode 1022 in the second electrode structure.

It may be understood that the signal processing unit may also include a plurality of signal processing subunits. The signal processing subunit is connected between the radio frequency signal source and at least one of the electrode structures, different signal processing subunits are connected to different electrode structures, and the signal processing subunit is configured to process a radio frequency signal that passes through the signal processing subunit.

For example, when the modulator includes a conductive strip (in the modulators shown in FIG. 4, FIG. 6, FIG. 7, and FIG. 9), for a conductive strip and an electrode in an electrode structure that need to be connected through a signal processing subunit, a connection strip between the conductive strip and the electrode may be divided into two connection segments, and the signal processing subunit may be connected in series between the two connection segments.

For another example, when the modulator does not include a conductive strip (in the modulator shown in FIG. 11), the first port and the second port of the signal source may be connected to different electrode structures through different signal processing subunits.

The plurality of signal processing subunits may perform same or different processing on radio frequency signals that pass through the signal processing subunits. For example, when the plurality of signal processing subunits are all amplifiers, amplification multiples of the plurality of amplifiers for the radio frequency signals that pass through the amplifiers may be the same or may be different.

Optionally, the plurality of signal processing subunits may be in one-to-one correspondence with the plurality of electrode structure groups, and each signal processing subunit is connected between the radio frequency signal source and a corresponding electrode structure group.

In conclusion, in the modulator provided in this embodiment of this application, the optical waveguide structure includes the plurality of optical waveguide sections that are connected in sequence, and light transmitted in these optical waveguide sections can be modulated in the electric fields provided by the corresponding electrode structures. In addition, the directions of the electric fields provided by the first electrode structure and the second electrode structure for the corresponding optical waveguide sections based on the radio frequency signal are opposite. This is equivalent to adding an equalization tap to light transmitted in the modulator, so that the light transmitted in the modulator can be equalized. After the light transmitted in the modulator is equalized, effect of modulating the light by the electrode structures in the modulator based on high-frequency and low-frequency radio frequency signals can be equalized, to increase a bandwidth of the modulator.

The directions of the electric fields provided by the first electrode structure and the second electrode structure are opposite, so that light in electrical domain can be equalized. The delay structure is connected between the optical waveguide sections or the optical waveguide subsections, so that light in optical domain can be equalized. According to the solution provided in this embodiment of this application, it is equivalent to introducing an optical equalizer inside the modulator, to increase the bandwidth of the modulator.

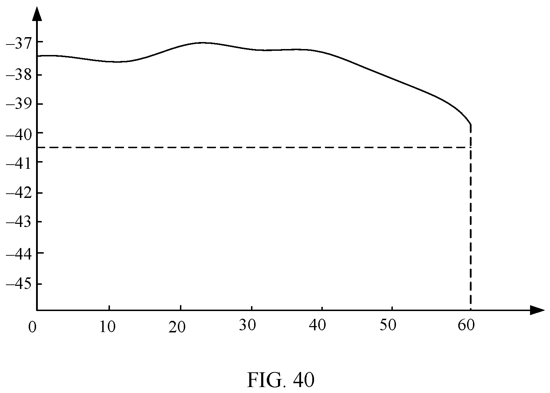

For example, FIG. 39 is a diagram of an operating curve of a modulator in a related technology. FIG. 40 is a diagram of an operating curve of a modulator (for example, the modulator shown in FIG. 4) according to an embodiment of this application. In FIG. 39 and FIG. 40, a horizontal coordinate represents a frequency of an optical signal modulated by the modulator, and is in a unit of GHz, and a vertical coordinate represents a response amplitude of the optical signal modulated by the modulator, and is in a unit of decibel (dB). It can be learned from FIG. 39 that a -3 dB bandwidth of a modulator in the related technology is 40 GHz, and a -3 dB bandwidth of the modulator in this embodiment of this application can be increased to 60 GHz, which is sufficient to support transmission of a 4-level pulse amplitude modulation (4-level pulse amplitude modulation, PAM4) signal at a rate of 200 gigabits per second (Gbps) for a single wavelength.

In this application, the terms "first", "second", and the like are merely intended for description, but cannot be understood as an indication or implication of relative importance. The term "at least one" means one or more, and the term "a plurality of" means two or more, unless expressly limited otherwise.

In the corresponding embodiments provided in this application, it should be understood that the disclosed structure may be implemented in other composition manners. For example, the embodiments described above are merely examples.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A modulator, comprising a Mach-Zehnder optical waveguide structure and a plurality of electrode structures, wherein
the optical waveguide structure is divided into a plurality of optical waveguide sections that are in one-to-one correspondence with the plurality of electrode structures and that are connected in sequence, and the plurality of electrode structures are arranged in parallel with the plurality of optical waveguide sections;
the electrode structures are connected to a radio frequency signal source, and the electrode structures are configured to provide electric fields for the corresponding optical waveguide sections based on a radio frequency signal from the radio frequency signal source, to modulate light transmitted in the optical waveguide sections; and
the plurality of electrode structures comprise a first electrode structure and a second electrode structure that are adjacent to each other, and directions of electric fields provided by the first electrode structure and the second electrode structure are opposite.

2. The modulator according to claim 1, wherein the first electrode structure and the second electrode structure are configured to provide electric fields for the corresponding optical waveguide sections based on a same radio frequency signal from the radio frequency signal source.

3. The modulator according to claim 2, wherein the radio frequency signal source has a first port and a second port, the first port is configured to output a first radio frequency signal, the second port is configured to output a second radio frequency signal, the first radio frequency signal and the second radio frequency signal are differential signals, and the same radio frequency signal comprises at least one of the first radio frequency signal and the second radio frequency signal.

4. The modulator according to claim 3, wherein the optical waveguide section comprises a first optical waveguide and a second optical waveguide, the electrode structure comprises a first electrode, a second electrode, and a third electrode, and the modulator further comprises a first conductive strip and a second conductive strip;
the first conductive strip, the first electrode, the first optical waveguide, the second electrode, the second optical waveguide, the third electrode, and the second conductive strip are arranged in sequence, and the first optical waveguide, the second optical waveguide, the first conductive strip, and the second conductive strip are arranged in parallel; and
the first conductive strip is connected to the first port, and the second conductive strip is connected to the second port; the first electrode in the first electrode structure and the third electrode in the second electrode structure are both connected to the first conductive strip; the plurality of second electrodes in the plurality of electrode structures are connected; and the third electrode in the first electrode structure and the first electrode in the second electrode structure are both connected to the second conductive strip.

5. The modulator according to claim 3, wherein the optical waveguide section comprises a first optical waveguide and a second optical waveguide, the electrode structure comprises a first electrode, a second electrode, a third electrode, and a fourth electrode, and the modulator further comprises a first conductive strip, a second conductive strip, and a third conductive strip;
the first conductive strip, the first electrode, the first optical waveguide, the second electrode, the second conductive strip, the third electrode, the second optical waveguide, the fourth electrode, and the third conductive strip are arranged in sequence, and the first optical waveguide, the second optical waveguide, the first conductive strip, the second conductive strip, and the third conductive strip are arranged in parallel;
the second conductive strip is connected to the first port or the first conductive strip is connected to the first port, and the third conductive strip is connected to the second port; and
the first electrode in the first electrode structure and the second electrode in the second electrode structure are both connected to the first conductive strip; the second electrode in the first electrode structure, the first electrode in the second electrode structure, the third electrode in the first electrode structure, and the fourth electrode in the second electrode structure are all connected to the second conductive strip; and the fourth electrode in the first electrode structure and the third electrode in the second electrode structure are both connected to the third conductive strip.

6. The modulator according to claim 4 or 5, wherein for an electrode that is in the electrode structure and that is connected to a conductive strip, the electrode is in a strip shape parallel to the conductive strip, and one end of the electrode is connected to the conductive strip through a connection strip; and
in the electrode structure, two electrodes connected to adjacent conductive strips are located between connection strips connected to the two electrodes, in an extension direction of the conductive strips, a distance between the two electrodes is less than (A+B)/2, and A and B respectively represent lengths of the two electrodes in the extension direction.

7. The modulator according to any one of claims 2 to 6, wherein a transmission direction of light in the optical waveguide structure is the same as or opposite to an arrangement direction of the first electrode structure and the second electrode structure.

8. The modulator according to any one of claims 2 to 7, wherein the modulator further comprises at least one of a first delay structure and a second delay structure;
the first delay structure and the second delay structure are arranged in sequence in the transmission direction of light in the optical waveguide structure, the first delay structure and the second delay structure each are connected to adjacent optical waveguide sections in the plurality of optical waveguide sections, the adjacent optical waveguide sections connected to the first delay structure comprise an optical waveguide section corresponding to the first electrode structure and an optical waveguide section corresponding to the second electrode structure, and the adjacent optical waveguide sections connected to the second delay structure are different from the adjacent optical waveguide sections connected to the first delay structure; and
the delay structure is configured to increase a transmission delay of light between optical waveguide sections connected to the delay structure, and light transmitted in the delay structure is not modulated by the electrode structures.

9. The modulator according to claim 8, wherein the plurality of electrode structures comprise a plurality of electrode structure groups that are arranged in sequence, and different electrode structure groups comprise a same quantity of electrode structures; a first electrode structure group, a second electrode structure group, and a third electrode structure group are three consecutive electrode structure groups in the plurality of electrode structure groups, the first electrode structure belongs to the first electrode structure group, and the second electrode structure belongs to the second electrode structure group; and
the adjacent optical waveguide sections connected to the second delay structure comprise an optical waveguide section corresponding to the second electrode structure group and an optical waveguide section corresponding to the third electrode structure group.

10. The modulator according to claim 1, wherein the radio frequency signal source has a first port and a second port, the first port is configured to output a first radio frequency signal, the second port is configured to output a second radio frequency signal, and the first radio frequency signal and the second radio frequency signal are differential signals; and
the first electrode structure is configured to provide an electric field for the corresponding optical waveguide section based on the first radio frequency signal, and the second electrode structure is configured to provide an electric field for the corresponding optical waveguide section based on the second radio frequency signal.

11. The modulator according to claim 10, wherein the optical waveguide section comprises a first optical waveguide and a second optical waveguide, the electrode structure comprises a first electrode, a second electrode, and a third electrode, and the first electrode, the second electrode, and the third electrode are all in a strip shape;
the first electrode, the first optical waveguide, the second electrode, the second optical waveguide, and the third electrode are arranged in sequence and in parallel, and a length of the second electrode in the first electrode structure is different from a length of the second electrode in the second electrode structure; and
the second electrode in the first electrode structure is connected to the first port, and the second electrode in the second electrode structure is connected to the second port.

12. The modulator according to claim 11, wherein the optical waveguide structure extends along an S shape, and the first electrode structure and the second electrode structure are arranged in sequence in an arrangement direction of the first optical waveguide and the second optical waveguide.

13. The modulator according to any one of claims 10 to 12, wherein light transmitted in the optical waveguide structure sequentially passes through the first electrode structure and the second electrode structure, an optical waveguide section corresponding to the second electrode structure comprises a first optical waveguide subsection and a second optical waveguide subsection that are connected in sequence, and the modulator further comprises a delay structure that connects the first optical waveguide subsection and the second optical waveguide subsection; and the delay structure is configured to increase a transmission delay of light between the optical waveguide subsections connected to the delay structure, and light transmitted in the delay structure is not modulated by the electrode structures.

14. The modulator according to claim 8, 9, or 13, wherein the delay structure in the modulator comprises an auxiliary optical waveguide, a slow-wave structure, or a sub-wavelength grating.

15. The modulator according to any one of claims 1 to 14, wherein the modulator further comprises a signal processing unit, the signal processing unit is connected between the radio frequency signal source and the plurality of electrode structures, and the signal processing unit is configured to process a radio frequency signal that passes through the signal processing unit.

16. The modulator according to claim 15, wherein the signal processing unit comprises a plurality of signal processing subunits; and
the signal processing subunit is connected between the radio frequency signal source and at least one of the electrode structures, different signal processing subunits are connected to different electrode structures, and the signal processing subunit is configured to process a radio frequency signal that passes through the signal processing subunit.

17. An optical module, comprising a light source, a radio frequency signal source, and the modulator according to any one of claims 1 to 16, wherein the light source is configured to transmit light to the modulator, the radio frequency signal source is configured to provide a radio frequency signal for the modulator, and the modulator is configured to modulate the light from the light source based on the radio frequency signal from the radio frequency signal source.

18. An optical communication device, comprising: a processor, a memory, and the optical module according to claim 17, wherein the memory stores a program, the processor is configured to execute the program stored in the memory, and the processor is further configured to communicate with another optical communication device through the optical module.

19. An optical communication system, comprising a plurality of optical communication devices, wherein at least one of the optical communication devices is the optical communication device according to claim 18.
